# EUROPÄISCHE PATENTSCHRIFT

(11) **EP 4 409 258 B1**
(45) Veröffentlichungstag und Bekanntmachung des Hinweises auf die Patenterteilung: **06.11.2024**
(21) Anmeldenummer: 23808666.4
(22) Anmeldetag: 26.10.2023
(51) Int. Cl.: G01N 3/10

(54) **PRÜFTECHNIK FÜR ROHRFÖRMIGE PROBENKÖRPER UNTER VERWENDUNG VON LIQUID-DRUCK**
TESTING TECHNIQUE FOR TUBULAR TEST PIECES USING LIQUID PRESSURE
TECHNIQUE D'ESSAI POUR UN ÉCHANTILLON D'ESSAI TUBULAIRE FAISANT INTERVENIR UNE PRESSION DE LIQUIDE

(30) Priorität: 27.10.2022 KR 20220140318
(43) Veröffentlichungstag der Anmeldung: 07.08.2024
(73) Patentinhaber: IPT Institut für Prüftechnik Gerätebau GmbH & Co. KG, 86447 Todtenweis (DE)
(72) Erfinder: CHOI, Sun Woong, Daejeon 34888 (KR); LEE, Pyeong-An, Daejeon 34046 (KR); STAKENBORGHS, Bob, Baton Rouge, Louisiana 70815 (US)
(74) Vertreter: ERNICKE Patent- und Rechtsanwälte PartmbB
(86) Internationale Anmeldenummer: PCT/EP2023/079999
(87) Internationale Veröffentlichungsnummer: WO 2024/089210

(56) Entgegenhaltungen:
- CN-A- 114 414 380

## Beschreibung

### Technisches Gebiet

Die vorliegende Erfindung betrifft eine Vorrichtung zur Durchführung eines Ganzrohr-Zugversuchs unter Verwendung von Flüssigkeitsdruck, wie z. B. Hydraulikdruck. Herkömmliche Ganzrohr-Zugversuchsvorrichtungen sind nur schwer in der Lage, Zugversuche an großen Rohren durchzuführen, da insbesondere mit zunehmender Rohrgröße eine hohe Belastbarkeit der Vorrichtung erforderlich ist. Die vorliegende Erfindung ermöglicht jedoch die Durchführung von Zugprüfungen an ganzen Rohren beliebiger Größe unter Verwendung von Druckwerten, die typischerweise bei allgemeinen Rohrprüfungsanwendungen genutzt werden.

Um die Schwierigkeiten herkömmlicher Zugprüfungen an ganzen Rohren zu überwinden, wird bei der derzeitigen Praxis der Zugprüfung eine aus einem Teil des Rohrs herausgeschnittene Probe verwendet, ein sog. Coupon. Daher werden die Rohreigenschaften, die aus dem Probenstück und nicht aus dem gesamten Rohr ermittelt werden, zur Charakterisierung des gesamten Rohrs verwendet. Dies kann zu Fehlcharakterisierungen der Belastbarkeit des gesamten Rohrs führen.

Die vorliegende Erfindung ermöglicht es, auf einfache und genaue Weise Zugversuche an ganzen Rohren unter Verwendung von Flüssigkeitsdruck durchzuführen, zur Bestimmung der Belastbarkeit und insbesondere der Zugeigenschaften des Rohrs.

### Bekannte Techniken

Für die sichere und zuverlässige Auslegung von Rohrleitungssystemen, wie Wasser- und Gasleitungen, Rohrleitungen für den Flüssigkeitstransport in Kernkraftwerken, Wärmekraftwerken und chemischen Anlagen, ist es unerlässlich, die Eigenschaften des Rohrleitungssystems genau zu bestimmen.

Die Ermittlung dieser Eigenschaften (z. B. Festigkeitseigenschaften) der Komponenten des Rohrleitungssystems, wie Rohre und Verbindungen, erfordert jedoch oft einen hohen Zeit- und Kostenaufwand. Dies ist besonders bei großen Rohren eine Herausforderung, da für die Zugprüfung des gesamten Rohrs eine Ausrüstung erforderlich ist, die große Lasten übertragen kann.

Daher ist die herkömmliche Prüfung des gesamten Rohrs auf kleine Rohre beschränkt, und bei größeren Rohren werden zur Bestimmung der mechanischen Festigkeit aus einem Teil des Rohrs herausgeschnittene Prüfstücke, sog. Coupons verwendet. Die aus dem Coupon-Test gewonnenen Informationen werden dann zur Bewertung der Versagensmerkmale des Rohrleitungssystems verwendet.

Im Gegensatz zu einer allgemein verwendeten mechanischen Zugprüfmaschine für die Zugprüfung ganzer Rohre wird in dem koreanischen Patent Nr. 10-1700999 eine herkömmliche Vorrichtung für die Prüfung ganzer Rohre offenbart. Dieses herkömmliche Verfahren bezieht sich auf eine Prüfvorrichtung, die es ermöglicht, mit Hilfe eines Hebels Lasten auf die gesamte Rohrprobe aufzubringen und die Bruchzähigkeit des Rohrs zu messen. Da dieses herkömmliche Verfahren jedoch Rohre mit einem Riss senkrecht zur Rohrachse prüft, eignet es sich nicht für die Messung der Zug- und Druckeigenschaften ganzer Rohre.

CN 114 414 380 A offenbart einen bekannten Probenträger.

### Aufgabe

Es ist Aufgabe der vorliegenden Erfindung, eine verbesserte Materialprüftechnik aufzuzeigen. Die Erfindung löst diese Aufgabe durch die Merkmale der eigenständigen Ansprüche.

Die vorliegende Erfindung überwindet das Problem, das mit dem herkömmlichen Ganzrohr-Zugversuch verbunden ist, und bezieht sich auf eine neuartige Materialprüftechnik für einen Ganzrohr-Zugversuch unter Verwendung von Flüssigkeitsdruck. Die Materialprüftechnik umfasst ein Materialprüfverfahren, das mit beliebigen Mitteln ausführbar ist. Sie umfasst ferner einen Probenträger, der in dem Materialprüfverfahren vorteilhaft einsetzbar ist, sowie eine Materialprüfvorrichtung zur Unterstützung bei der Durchführung des Materialprüfverfahrens.

Herkömmliche Ganzrohr-Zugversuchsvorrichtungen erfordern eine hohe Tragfähigkeit der Versuchseinrichtungen bei zunehmender Rohrgröße, was den Zugversuch an großen Rohren zu einer Herausforderung macht. Die vorliegende Erfindung ermöglicht jedoch die Materialprüfung, insbesondere eine Zugprüfung ganzer Rohre unter Verwendung von Druckwerten auszuführen, die für die Rohrprüfung üblich sind, und zwar weitgehend unabhängig von der Rohrgröße. Mit anderen Worten ist es eine Aufgabe der vorliegenden Offenbarung, eine Materialprüftechnik aufzuzeigen, mit der die Durchführung eines Belastbarkeitstests, insbesondere einer Zugprüfung an ganzen rohrförmigen Probenkörpern (im Gegensatz zu Coupon-Tests) auch bei Rohr-Durchmessern weit oberhalb von 250mm möglich ist.

Die herkömmliche Prüfung ganzer Rohre ist auf kleine Rohre beschränkt und insbesondere ausschließlich für Rohre mit einem Durchmesser bis 250 mm international normiert. Bei größeren Rohren werden zur Bestimmung der mechanischen Festigkeit aus einem Teil des Rohrs herausgeschnittene Coupons verwendet. Die Coupons umfassen insbesondere keinen Voll-Querschnitt des ganzen Rohrs, sondern nur einen Ausschnitt aus dem Querschnitt. Die vorliegende Erfindung bezieht sich auf eine Materialprüftechnik, insbesondere für einen Ganzrohr-Zugversuch unter Verwendung von Flüssigkeitsdruck, die eine einfache und genaue Bestimmung der Belastbarkeit, insbesondere der Zugeigenschaften des Rohrs ermöglicht, und zwar weitgehend unabhängig von der Rohrgröße.

### Mittel zur Lösung

Die vorliegende Offenbarung umfasst eine Mehrzahl von Aspekten, die einzeln oder gemeinsam nutzbar sind, um die vorgeschlagene Materialprüftechnik anzuwenden. Die Materialprüftechnik kann zwar vorteilhaft für Rohre mit großen Querschnitten angewendet werden, sie ist aber ebenso bei Rohren mit einem kleinen Durchmesser von 250mm oder weniger anwendbar.

Es werden mehrere Ausführungsformen von Vorrichtungsmitteln offenbart, die für die Anwendung der Materialprüftechnik vorteilhaft nutzbar sind und jeweils für sich einen eigenständigen Aspekt der Offenbarung darstellen. Diese Vorrichtungsmittel können in beliebiger Weise miteinander kombiniert werden, auch wenn bestimmte Kombinationen in der vorliegenden Offenbarung empfohlen sind.

Gemäß einem Aspekt der Offenbarung ist ein Materialprüfverfahren zur Prüfung der Belastbarkeit eines rohrförmigen Probenkörpers vorgeschlagen, das zumindest die folgenden Schritte umfasst. Es wird ein druckstabiles Gehäuse bereitgestellt, das eine Gehäusepassage hat oder bildet. In die Gehäusepassage wird (mindestens oder genau) ein rohrförmiger Probenkörper eingebracht. Der rohrförmige Probenkörper kann aus einem beliebigen Material, bevorzugt aus einem synthetischen Material oder einem Verbundmaterial gefertigt sein. Der Probenkörper kann weiter insbesondere ein Kunststoffrohr sein, beispielsweise aus PVC oder PE. Er kann alternativ oder zusätzlich ein Rohr sein, das ein in einer Matrix eingebettetes Fasermaterial umfasst. Bei dem Fasermaterial kann es sich beispielsweise um Glasfasern oder Kohlefasern handeln. Bei dem Matrix-Werkstoff kann es sich beispielsweise um ein Harz oder einen thermoplastischen Kunststoff handeln. Alternativ oder zusätzlich kann der Probenkörper aus einem Metallwerkstoff gefertigt sein oder einen Metallwerkstoff umfassen. Der Probenkörper kann einen zwei- oder mehrlagigen Aufbau haben und bspw. eine Innenschicht, eine Außenschicht und gegebenenfalls eine oder mehrere Zwischenschichten aus zumindest teilweise unterschiedlichen Materialien umfassen.

Bei dem zu testenden Rohr kann es sich um einen (zu Beginn der Materialprüfung) in der Axialrichtung homogen gefügten Körper handeln, bspw. um ein extrudiertes und Fügestellen-freies Rohr.

Alternativ kann der zu testende Probekörper ein aus zwei Teil-Probenkörpern (200, 200`) verbundenes Rohr sein, wobei die Teil-Probenkörper (200, 200`) insbesondere an ihren zum Mittelbereich weisenden Stirnseiten durch eine Fügeverbindung verbunden sind. Eine solche Fügeverbindung kann beispielsweise eine Schweißverbindung oder eine Klebeverbindung sein. Alternativ können die beiden Teil-Probenkörper (200, 200`) durch einen separaten Rohr-Anschlusskörper miteinander verbunden sein, beispielsweise durch eine Rohr-Kupplung. Das Materialprüfverfahren gemäß der vorliegenden Offenbarung kann auch dazu verwendet werden, eine solche Verbindung (210) zwischen zwei Teil-Probenkörpern (200, 200`) bzw. deren Belastbarkeit zu testen.

Das Rohr bzw. der Probenkörper kann eine beliebige Querschnittsform haben, beispielsweise die Form eines Kreisrings, eines Ellipsenrings, eines Polygonrings oder sonstiger ringförmiger Querschnitte. Die radialen Außenwandung und die radiale Innenwandung des Querschnitts können eine übereinstimmende oder eine unterschiedliche Form haben, bspw. eine polygonförmige Außenwandung und eine kreisförmige Innenwandung und ähnliche Kombinationen.

Mit der Axialrichtung ist in der vorliegenden Offenbarung eine Längserstreckung des Probenkörpers gemeint, zu welcher bevorzugt eine einheitliche Querschnittsform vorliegt. Eine senkrecht zu der Axialrichtung orientierte Richtung wird nachfolgend als radiale Richtung bezeichnet. Sie hat einen Ursprung im Hohlraum des Probenkörpers bzw. im Inneren des Probenkörpers und erstreckt sich nach außen hin durch die Probenkörperwandung.

Innerhalb eines Teils der Gehäusepassage wird eine Fluid-Druckkammer abgetrennt, wobei die Fluid-Druckkammer einerseits einen Hohlraum in dem (mindestens einen) rohrförmigen Probenkörper und andererseits ein ringförmiges Volumen zwischen der radialen Außenfläche des Probenkörpers und der Gehäusepassage umfasst. Zwei Endabschnitte des Probenkörpers werden an den in Axialrichtung des Probenkörpers einander gegenüberliegenden Abtrennungen der Fluid-Druckkammer festgelegt. Die Abtrennungen können auf beliebige Weise gebildet werden. Bevorzugt kann ein Probenträger gemäß der vorliegenden Offenbarung verwendet werden, der weiter unten erläutert wird und einen separaten Aspekt der Offenbarung darstellt. Die Festlegung eines Endabschnitts des Probenträgers kann bevorzugt mittels einer Rohraufnahme erfolgen, die den Endabschnitt an einer der Abtrennungen festlegt, insbesondere an einem Probenträger. Zumindest eine der Abtrennungen ist in der Axialrichtung des Probenkörpers verschieblich.

Es wird eine Flüssigkeit in die Fluid-Druckkammer eingebracht, sodass sowohl der Hohlraum (innerhalb des rohrförmigen Probenkörpers) als auch das ringförmige Volumen (zwischen dem Probenkörper und der Gehäusepassage) mit Flüssigkeit gefüllt werden. Die Füllung der Fluid-Druckkammer erfolgt bevorzugt vollständig mit der Flüssigkeit. Die Flüssigkeit in der Fluid-Druckkammer wird mit einem Überdruck beaufschlagt. Der Probenkörper wird unter weiterem Einbringen von mit Überdruck beaufschlagter Flüssigkeit in den Hohlraum sowie das ringförmige Volumen gedehnt, wobei sich das Volumen der Fluid-Druckkammer erweitert und sich zumindest eine Abtrennung der Fluid-Druckkammer in der Axialrichtung des rohrförmigen Probenkörpers unter Mitnahme des dort festgelegten Endabschnitts des Probenkörpers verschiebt.

Während der Durchführung des Materialtests bzw. während der Druckbeaufschlagung wird zumindest ein Parameter gemessen oder überwacht, um eine Belastbarkeitseigenschaft des Probenkörpers während zu beurteilen.

Gemäß einem weiteren Aspekt der vorliegenden Offenbarung ist ein Probenträger vorgeschlagen, der in dem Materialprüfverfahren gemäß der vorliegenden Offenbarung nutzbar ist.

Der offenbarungsgemäße Probenträger ist zur Aufnahme eines Endabschnitts eines rohrförmigen Probenkörpers für die Durchführung eines Belastbarkeitstests vorgesehen und eingerichtet. Der Probenträger kann insbesondere die mindestens eine verschiebliche Abtrennung bilden, die für die Durchführung des offenbarungsgemäßen Materialprüfverfahrens genutzt wird, oder einen Teil dieser Abtrennung bilden.

Der Probenträger hat eine Innenseite, die in der vorgesehenen Montageposition (des zu testenden Probenkörpers) zu einem Mittelbereich des zu testenden Probenkörpers hin orientiert ist, sowie eine (in der Axialrichtung des Probenkörpers entgegengesetzte) Außenseite. Zwischen der Innenseite und der Außenseite hat der Probenträger eine Mantelfläche. Ferner weist der Probenkörper eine Rohraufnahme auf, die dazu ausgebildet ist, den Endabschnitt des Probenkörpers festzulegen. Die Rohraufnahme kann den Endabschnitt des Probenträgers auf beliebige Weise festlegen.

Der Probenträger ist dazu ausgebildet, in einer umgebenden Gehäusepassage mit einem ringförmigen Kontakt gegenüber der Gehäusepassage aufgenommen zu werden. Weiterhin weist der Probenträger eine (erste) ringförmige Dichtungsstruktur auf, die an der Mantelfläche des Probenträgers angeordnet ist, wobei die (erste) Dichtungsstruktur dazu ausgebildet ist, einerseits eine ringförmige Abdichtung gegenüber der Gehäusepassage zu bilden und andererseits eine Translation / Verschiebung des Probenträgers in der Axialrichtung (des Probenkörpers) entlang der Gehäusepassage zuzulassen.

Gemäß einer ersten Ausführungsvariante ist vorgesehen, dass die Rohraufnahme eine Klemm-Rohraufnahme ist und den Endabschnitt greifend aufnimmt und hält. Gemäß einer zweiten Ausführungsvariante ist vorgesehen, dass die Rohraufnahme eine Axialanschlag-Rohraufnahme ist oder bildet und einen am Endabschnitt des Probenkörpers in Radialrichtung überstehenden und mit dem Endabschnitt einstückig gefügten Bund abstützt.

Ein weiterer Aspekt der vorliegenden Offenbarung betrifft eine Materialprüfvorrichtung für die Durchführung eines Belastbarkeitstests an einem rohrförmigen Probenkörper. Die Materialprüfvorrichtung umfasst ein druckstabiles Gehäuse mit einer Gehäusepassage. Innerhalb eines Teils der Gehäusepassage ist eine Fluid-Druckkammer abgetrennt oder (zumindest zeitweise) abtrennbar, in welcher ein zu testender rohrförmiger Probenkörper in einer vorgesehenen Montageposition einbringbar ist. Die Fluid-Druckkammer umfasst - wenn ein rohrförmiger Probenkörper in der vorgesehenen Montageposition angeordnet ist - einerseits einen Hohlraum innerhalb des rohrförmigen Probenkörpers und andererseits ein ringförmiges Volumen zwischen der radialen Außenfläche des Probenkörpers und der Gehäusepassage.

Die Materiaprüfvorrichtung umfasst weiterhin eine Festlegung für einen ersten Endabschnitt des Probenkörpers, insbesondere eine (erste) Rohraufnahme, die an einer ersten Abtrennung der Fluid-Druckkammer angeordnet und dazu ausgebildet ist, den ersten Endabschnitt des rohrförmigen Probenkörpers festzulegen.

Und die Materialprüfvorrichtung umfasst einen Probenträger mit einer (zweiten) Rohraufnahme, wobei der Probenträger an einem von dem ersten Axialende der Passage beabstandeten Bereich anordenbar oder angeordnet ist und zumindest anteilig die zweite Abtrennung der Fluid-Druckkammer bildet. Der rohrförmige Probenkörper ist in der vorgesehenen Montageposition zwischen der ersten Rohraufnahme und der zweiten Rohraufnahme befestigbar.

Die Materialprüfvorrichtung weist eine Liquid-Zuführung auf, die dazu ausgebildet ist, dass der Hohlraum und das ringförmige Volumen mit Flüssigkeit befüllbar sind, dass weiterhin die Flüssigkeit in dem Hohlraum und in dem ringförmigen Volumen mit Überdruck beaufschlagbar ist, sowie dass weitere mit Überdruck beaufschlagbare Flüssigkeit in den Hohlraum sowie das ringförmige Volumen einbringbar ist. Der Probenträger ist in der Gehäusepassage unter der weiteren Einbringung von mit Druck beaufschlagter Flüssigkeit mitsamt der (zweiten) Rohraufnahme sowie unter Mitnahme des dort festgelegten Endabschnitts des Probenkörpers in der Axialrichtung des Probenkörpers verschiebbar.

Gemäß einer bevorzugten Ausführungsform der vorliegenden Offenbarung ist also eine Materialprüfvorrichtung vorgeschlagen, die für die Durchführung eines Belastbarkeitstests an einem rohrförmigen Probenkörper vorgesehen und eingerichtet ist, und eine Ganzrohr-Zugprüfvorrichtung bildet, die zur Erreichung der vorgenannten Ziele einen Fluiddruck verwendet.

Die Materialprüfvorrichtung gemäß der vorliegenden Offenbarung umfasst bevorzugt eine erste Rohraufnahme an der ersten Abtrennung (H1), wobei die erste Rohraufnahme dazu ausgebildet ist, den ersten Endabschnitt des rohrförmigen Probenkörpers in der vorgesehenen Montageposition an der ersten Abtrennung festzulegen, insbesondere greifend und haltend festzulegen. Weiter unten werden verschiedene Ausführungsarten einer solchen Rohraufnahme anhand von Beispielen ausgeführt sowie eine andere Festlegungsart beschrieben.

In der vorgesehenen Verwendung umfasst die Materialprüfvorrichtung gemäß einer ersten empfohlenen Ausbildung,
ein Rohr (200), d.h. den zu testenden rohrförmigen Probenkörper (dieser wird für die Durchführung der Materialprüfung von extern zugeführt und ist nicht ein dauerhafter Bestandteil der Materialprüfvorrichtung);
ein die Gehäusepassage begrenzendes Gehäuse (110), das als Körper ausgebildet ist, der das zu testende Rohr (200) umgibt;
eine Probenkörper-Festlegungs-Gruppe aus einer ersten Rohraufnahme und einem Probenträger mit einer zweiten Rohraufnahme, wobei diese Probenkörper-Festlegungs-Gruppe insbesondere als eine Endkappeneinheit (120) ausgebildet sein kann, die eine erste Endkappe (121) umfasst, die an einem Ende des Rohrs (200) installiert oder installierbar und am Ende des Gehäuses (110) befestigt ist, um das Innere des Gehäuses (110) abzudichten, und eine zweite Endkappe (122), die am gegenüberliegenden Ende des Rohrs (200) installiert ist, in Kontakt mit dem Inneren des Gehäuses (110) steht und sich entlang des Inneren des Gehäuses (110) bewegt.

In der vorgesehenen Verwendung umfasst die Materialprüfvorrichtung gemäß einer zweiten empfohlenen Ausbildung,
ein Rohr (200), d.h. den zu testenden rohrförmigen Probenkörper (dieser wird für die Durchführung der Materialprüfung von extern zugeführt und ist nicht ein dauerhafter Bestandteil der Materialprüfvorrichtung);
ein die Gehäusepassage begrenzendes Gehäuse (110), das als Körper ausgebildet ist, der das zu testende Rohr (200) umgibt;
eine Probenkörper-Festlegungs-Gruppe aus einer ersten Rohraufnahme und einem Probenträger mit einer zweiten Rohraufnahme, wobei diese Probenkörper-Festlegungs-Gruppe insbesondere als eine Ringträgereinheit ausgebildet sein kann, die einen ersten Probenträger-Ring (321) umfasst, der an einem ersten Ende des Rohrs (200) installiert oder installierbar ist, und einen zweiten Probenträger-Ring (322), der am gegenüberliegenden Ende des Rohrs (200) installiert oder installierbar ist, wobei beide Progenträger-Ringe (321, 322) in Kontakt mit dem Inneren des Gehäuses (110) stehen und mindestens einer der Probenträger-Ringe (321, 322) sich entlang der Gehäusepassage des Gehäuses (110) bewegen lässt.

Die Materialprüfvorrichtung kann in jeder Ausführungsart als eigenen Bestandteil oder als ein externes Mittel, das mit der Liquid-Zuführung verbunden oder verbindbar ist, umfassen: eine Druckversorgungseinheit (130), die insbesondere eine Druckversorgungsvorrichtung (131, PSD) umfasst, die unter Verwendung eines Fluids, insbesondere unter Verwendung einer Flüssigkeit, im Inneren des Gehäuses (110) Druck (Überdruck) bereitstellt, genauer gesagt in der Fluid-Druckkammer (F) im Inneren des Gehäuses (110).

Die Materialprüfvorrichtung kann als eigenen Bestandteil oder als ein externes Mittel umfassen: eine Datenverarbeitungseinheit (140), ausgebildet oder verbunden mit Sensoren (141), die mindestens einen Parameter während der Durchführung einer Materialprüfung erfassen oder überwachen. Der mindestens eine Parameter kann ein beliebiger geeigneter Parameter sein. Der mindestens eine Parameter kann insbesondere umfassen:
Einen Druck (Überdruck P+) in der Fluid-Druckkammer (F) und/oder einen Druck (Bereitstellungsdruck) der Druckversorgungseinheit (130); UND/ODER
eine Verschiebung zumindest eines Teilabschnitts des rohrförmigen Probenkörpers (200), insbesondere eines Endabschnitts des rohrförmigen Probenkörpers (200); die Verschiebung kann absolut oder relativ zu einem anderen Teilabschnitt des rohrförmigen Probenkörpers erfasst sein; UND/ODER
eine axiale Zugspannung in der Wandung des rohrförmigen Probenkörpers (200); UND/ODER
eine Verformung, insbesondere eine Dehnung des rohrförmigen Probenkörpers (200); UND/ODER
eine Energie oder Leistung, die für das Einbringen der Flüssigkeit und/oder für das Verschieben des Endabschnitts des Probenkörpers (200) in der Axialrichtung (A, B) aufgewendet wird.

Die Materialprüfvorrichtung kann als eigenen Bestandteil oder als ein externes Mittel umfassen: eine Datenverarbeitungsvorrichtung (142, DPD), die Signale und/oder Daten, insbesondere numerische Daten von den Sensoren (141) empfängt und verarbeitet.

Die Materialprüfvorrichtung kann in einer ersten Ausführungsart mindestens einen Probenträger (K) umfassen, der als eine Endkappe (121, 122) ausgebildet ist. In einer weiteren Ausführungsart kann die Materialprüfvorrichtung mindestens einen Probenträger (K') umfassen, der als ein Ring (321, 322) ausgebildet ist und der mit einem Stirnöffnung-Verschlusselement (N) zusammenwirkt. Das Stirnöffnung-Verschlusselement (N) kann ein Bestandteil der Materialprüfvorrichtung sein oder extern zugeführt sein. Das Stirnöffnung-Verschlusselement (N) kann in einer bevorzugten Ausführung das an einem zugeordneten Endabschnitt des Probenkörpers (200) einstückig angefügt sein, beispielsweise durch Kleben oder Schweißen. Weiter unten werden noch weitere Ausführungsarten eines Stirnöffnung-Verschlusselements beschrieben.

Eine oder mehrere Komponenten, ausgewählt aus dem Gehäuse (110), dem ersten Probenträger (der ersten Endkappe (121) / dem ersten Probenträger-Ring (321)) und dem zweiten Probenträger (der zweiten Endkappe (122) / dem zweiten Probenträger-Ring (322), einem Stirnöffnung-Verschlusselement (N), das insbesondere an einem zugeordneten Endabschnitt des Probenkörpers (200) einstückig angefügt ist), können eine Druckzuführungsöffnung (132, PSH) aufweisen, die ausgebildet ist, um Flüssigkeit (L) zu empfangen. Die Druckzuführungsöffnung(en) (132, PSH) können einzeln oder gemeinsam ein Bestandteil der Liquid-Zuführung (M) sein oder die Liquid-Zuführung (M) bilden. Die Flüssigkeit (L) kann von der Druckzuführungseinheit (130), insbesondere von einer Druckzuführungsvorrichtung (132, PSD) empfangen werden.

Die erste Abtrennung (H1), insbesondere der erste Probenträger, weiter insbesondere die erste Endkappe (121) kann an einem Ende des zu testenden Rohrs (200) installiert werden und mit dem einen Ende des Gehäuses (110) bzw. der Gehäusepassage (E) (fest) verbunden sein. Sie kann ferner eine Rohraufnahme (G) zur Befestigung des zu testenden Rohrs (200) umfassen. Die Rohraufnahme kann gemäß einer bevorzugten Ausbildung mit einer Außenfassung (121b) ausgebildet oder verbunden sein. Sie kann umfassen
einen Flansch (121a), der das Innere des Gehäuses (110) abdichtet;
die Außenfassung (121b), die mit dem Flansch (121a) verbunden ist und sich zwischen dem Gehäuse (110) und dem Rohr (200) befindet;
eine Innenfassung (121c), die das Innere des Rohrs (200) berührt und in einen in der Mitte des Flansches (121a) ausgebildeten Vorsprung eingesetzt ist;
und Schrägwandkörper (121d), der sich in einer bevorzugten Ausführung zwischen der Innenfassung (121c) und dem Rohr (200) befindet;

Die zweite Abtrennung (H2), insbesondere der zweite Probenträger, weiter insbesondere die zweite Endkappe (122) kann am gegenüberliegenden Ende des Rohrs (200) installiert werden. Bevorzugt steht der zweite Probenträger über die Außenfassung (122b) in verschieblichem und dichtendem Kontakt zur Gehäusepassage. Der zweite Probenträger kann umfassen
einen Flansch (122a), der das Innere des Gehäuses (110) berührt;
die Außenfassung (122b), die mit dem Flansch (122a) verbunden ist und sich zwischen dem Gehäuse (110) und dem Rohr (200) befindet;
eine Innenfassung (122c), die in einen in der Mitte des Flansches (122a) ausgebildeten Vorsprung eingesetzt ist und das Innere des Rohres (200) berührt;
und einen Schrägwandkörper (122d), der sich in einer bevorzugten Ausführung zwischen der Innenfassung (122c) und dem Rohr (200) befindet.

Der Flansch (121a) kann mit dem Gehäuse (110) durch Schrauben, Schellen oder ähnliche Befestigungsmittel verbunden werden.

Die erste Endkappe (121) und die zweite Endkappe (122) können in dem Rohr (200) eingesetzt und befestigt werden.

### Wirkungen der Erfindung

Herkömmliche Zugprüfvorrichtungen für ganze Rohre erfordern mit zunehmender Größe des Rohrs eine hohe Belastbarkeit der Vorrichtung, was die Durchführung von Zugprüfungen an großen Rohren erschwert. Die vorliegende Erfindung ermöglicht hingegen die Durchführung des Zugversuchs unter Verwendung eines Drucks, der typischerweise in allgemeinen Anwendungen verwendet wird, unabhängig von der Größe des Rohrs. Der Überdruck kann beispielsweise ca. 100 bar betragen. Um die Schwierigkeiten herkömmlicher Zugversuche an ganzen Rohren zu überwinden, werden häufig nur bestimmte Teile der Rohre gemessen, indem couponförmige Proben aus dem Rohr geschnitten werden. Die vorliegende Erfindung hingegen ermöglicht eine einfache Zugprüfung des gesamten Rohrs unter Verwendung von Flüssigkeitsdruck, was eine einfache und genaue Messung der Zugeigenschaften des Rohrs ermöglicht.

Die vorliegende Erfindung maximiert die Einsatzmöglichkeiten, indem sie eine Zugprüfung auch in Fällen ermöglicht, in denen Verbindungen oder Löcher im Rohr vorhanden sind.

Die vorliegende Erfindung verbessert die Verfügbarkeit von Prüfungen, indem sie die Durchführung von Zugprüfungen unter Verwendung von Druck ermöglicht, wie er in allgemeinen Anwendungen verwendet wird, unabhängig von der Größe des Rohrs.

Die vorliegende Erfindung führt dazu, dass der rohrförmige Probenkörper während der Materialprüfung in einen mehrachsigen Spannungszustand versetzt wird. Die Wandung des rohrförmigen Probenkörpers wird mit einem Überdruck auf der äußeren radialen Wandung sowie einem Überdruck auf der inneren radialen Wandung beaufschlagt. Hierdurch entsteht eine Kompressionsspannung in Radialrichtung.

Gemäß einerseits dem Verhältnis des Querschnittsumfangs einerseits der radialen Außenfläche und andererseits der radialen Innenfläche entsteht durch den an beiden radialen Flächen anliegenden Überdruck weiterhin eine Kompressionsspannung in Tangentialrichtung.

Die Kompressionsspannungen in Radialrichtung und Tangentialrichtung hängen ferner von der Höhe des Überdrucks ab.

Im Vergleich zu einem normalen Zugversuch, bei dem ein rohrförmiger Probenkörper lediglich einer Zugkraft unterliegt, die an den Endabschnitten des Probenkörpers aufgebracht werden, und zu einer reinen Zugspannung in Axialrichtung des Probenkörpers führt, kommt es bei der Materialprüfung gemäß der vorliegenden Offenbarung also zu einer anderen Belastung.

Bei der Materialprüfung gemäß der vorliegenden Erfindung führt der Überdruck in dem Hohlraum und in dem ringförmigen Volumen auch zu einer Kraft, die auf die Abtrennungen wirkt und infolge der dortigen Festlegungen der Endabschnitte des Probenkörpers eine Zugspannung in Axialrichtung verursacht.

Es hat sich gezeigt, dass das Dehnungs- und Versagensverhalten von rohrförmigen Probenkörpern in dem Materialprüfverfahren gemäß der vorliegenden Offenbarung in bestimmten Anwendungsfällen dieselbe Form der Kennlinien erzeugt, wie bei einem normalen Zugversuch unter rein axialer Zugkraft. Jedoch werden typische Phänomene wie das Ausmaß einer Dehnung oder das Auftreten einer Streckgrenze bei proportional geringeren Zugspannungen erreicht als beim normalen Zugversuch.

Es wird angenommen, dass die zusätzlichen Kompressionsspannungen in Radialrichtung und Tangentialrichtung in Überlagerung zu den Axialspannungen in der Wandung des Probenkörpers zu einer Superposition der Spannungen im Material führt, und dass - durch das ergänzende Auftreten der Kompressionsspannungen - eine durch Spannungen versursachte Änderung des Mikrogefüge des Materials deshalb schon bei niedrigeren axialen Zugspannungen auftritt.

Das vorgenannte Phänomen der Erzielung von in der Form gleichwertiger Belastbarkeits-Kennlinien bei vergleichbar geringeren Zugspannungen führt dazu, dass dieselben Belastbarkeitsgrenzen oder Gefügeänderungen im Material bei einem geringeren Aufwand an Zugkraft und entsprechend bei geringeren notwendigen Drücken erzielt werden können.

Ferner bedarf es keiner aufwendigen Hebel oder Getriebekonstruktionen, um die für den Belastbarkeitstest erforderlichen Kräfte (Zugkraft auf Endabschnitte des Probenkörpers + Kompressionskräfte auf radiale Außenwandung und radiale Innenwandung des Probenkörpers) aufzubringen.

Bei einem Kunststoffrohr mit einem SDR-Wert 11 (Dicke der Probenkörperwand beträgt 1/11 bzw. ein Elftel des Außendurchmessers) konnten mit dem Materialtest gemäß der vorliegenden Offenbarung folgende Materialeigenschaften als direkt proportional zu den entsprechenden Materialeigenschaften bei einem Standard-Zugversuch nachgewiesen werden:
- Elastitzität (Dehnung / axiale Zugspannung)
- 5% Streckgrenze (maximale Zugspannung, bei der eine dauerhafte Dehnung um 5% erhalten bleibt)
- Fließgrenze (maximale Zugspannung, nach deren Erreichen das Material des Probenkörpers mit steigender Dehnung weniger Zugspannung erträgt)
- Bruchgrenze bei Dehnungsgeschwindigkeit von 50mm/min.

Folglich ist durch die Materialprüftechnik gemäß der vorliegenden Offenbarung erreicht, dass ein Belastungstest auch bei großen Rohrdurchmessern, die deutlich oberhalb von 250mm liegen, mit in der Materialprüftechnik üblichen Werten des Liquid-Überdrucks von bspw. 50-100 bar durchführbar sind. Da der Liquid-Überdruck in dem Hohlraum und in dem ringförmigen Volumen zu einer Herabsetzung der erforderlichen axialen Zugspannung führt, die für das Auftreten charakteristischer Phänomene und Belastbarkeits-Kennwerte erforderlich sind, bedarf es im Vergleich zum normalen Zugversuch einer geringeren axialen Zugkraft, die auf die Endabschnitte des Probenkörpers einwirken. Demensprechend müssen die Vorrichtungsbestandteile eine geringere Belastbarkeit aufweisen.

Im Vergleich zu reinen Innen-Überdruck Berstversuchen, bei denen lediglich ein Hohlraum des Probenkörpers mit einer Flüssigkeit gefüllt wird, die unter Überdruck gesetzt wird, kommt es bei der Materialprüftechnik gemäß der vorliegenden Offenbarung zu einem anderen Verhältnis der Spannungen in der Rohrwandung. Bei einem Innen-Überdruck Berstversuch wirkt ausschließlich eine Kraft auf die radialen Innenwandung des Probenkörpers, die durch den Überdruck im Hohlraum herbeigeführt wird, aber es gibt keine entgegengerichtete Kraft auf die radiale Außenwandung. Deshalb bilden sich bei einem reinen Innen-Überdruck Berstversuch im Wesentlichen Zugspannungen aus, die in Radialrichtung wirken. Diese Zugspannungen in Radialrichtung sind die dominierenden Spannungen und führen zu einem lokalen Auswölben des Querschnitts am schwächsten Punkt der Probenkörper-Wandung sowie nachfolgend an dieser Stelle zu einem Aufplatzen der Wandung. Sie haben mit der Belastbarkeit bei einem Standard-Zugversuch keine Vergleichbarkeit.

Durch das Aufbringen eines Überdrucks in dem ringförmigen Volumen wird bei der Materialprüftechnik gemäß der vorliegenden Erfindung - im Vergleich zum reinen Innen-Überdruck Berstversuch - eine zusätzliche Kraft aufgebracht, die auf die radiale Außenwandung wirkt und die Kraft auf die radiale Innenwandung kompensiert oder überkompensiert. Hierdurch wird das Auswölben des Rohrquerschnitts vermieden und es zeigt sich dasselbe Verformungsverhalten, das von einem normalen Zugversuch gut bekannt ist, allerdings bei deutlich geringeren notwendigen axialen Zugspannungen.

Die Erfindung ist in den Zeichnungen beispielhaft und schematisch dargestellt. Diese zeigen:
- Figur 1:: eine perspektivische Ansicht einer ersten Ausführungsform einer offenbarungsgemäßen Materialprüfvorrichtung unter Verwendung von Flüssigkeitsdruck.
- Figur 2:: eine Seitenansicht der ersten Ausführungsform der vorliegenden Offenbarung.
- Figur 3:: eine Schnittdarstellung (A-A') der ersten Ausführungsform der vorliegenden Offenbarung.
- Figur 4:: eine perspektivische Ansicht einer zweiten Ausführungsform der in der vorliegenden Offenbarung beschriebenen Materialprüfvorrichtung für ganze Rohre unter Verwendung von Flüssigkeitsdruck.
- Figur 5:: eine Seitenansicht der zweiten Ausführungsform der vorliegenden Offenbarung.
- Figur 6:: eine Schnittdarstellung (B-B') der zweiten Ausführungsform der vorliegenden Offenbarung.
- Figur 7:: eine Ausführungsform der Druckversorgungseinheit und der Datenverarbeitungseinheit der vorliegenden Offenbarung.
- Figuren 8 u. 9:: Erläuterungsdiagrame analog zu Figuren 3 und 6, in denen die Druckverhältnisse in der Fluid-Druckkammer gegenüber dem Außenraum und skizziert sind.

### Detailbeschreibung der Figuren

Nachfolgend wird die vorliegende Offenbarung unter Bezugnahme auf die beigefügten Zeichnungen näher beschrieben. Es ist jedoch zu beachten, dass die in der Beschreibung und den Ansprüchen verwendeten Begriffe und Wörter nicht beschränkend auf der Grundlage ihrer gewöhnlichen oder wörterbuchmäßigen Bedeutung ausgelegt werden sollten. In der Offenbarung sollten die Begriffe gemäß dem Grundsatz der angemessenen Definition von Begriffen zur bestmöglichen Beschreibung der Offenbarung so ausgelegt werden, dass sie mit den technischen Ideen der vorliegenden Offenbarung übereinstimmen. Sofern nicht anders definiert, haben die hier verwendeten technischen und wissenschaftlichen Begriffe die Bedeutung, die von Fachleuten auf dem Gebiet, zu dem diese Offenbarung gehört, gemeinhin verstanden wird. Auf eine detaillierte Beschreibung und Erläuterung von Funktionen und Konfigurationen, die den Kern der vorliegenden Offenbarung unnötig überdecken könnten, wird in der folgenden Beschreibung und den zugehörigen Zeichnungen verzichtet. Die nachstehend dargestellten Zeichnungen dienen als Beispiele, um dem Fachmann das Konzept der vorliegenden Offenbarung hinreichend zu vermitteln. Daher ist die vorliegende Offenbarung nicht auf die unten dargestellten Zeichnungen beschränkt und kann auch in anderen Formen ausgeführt werden. Darüber hinaus bezeichnen die gleichen Referenznummern in der gesamten Beschreibung die gleichen Komponenten. Es sollte beachtet werden, dass identische Komponenten in den Zeichnungen, wo immer möglich, durch die gleichen Referenznummern dargestellt werden.

Die zu den Ausführungsbeispielen beschriebenen und gezeigten Aspekte sind in der erläuterten Kombination empfehlenswert, können jedoch in beliebige Weise miteinander kombiniert werden.

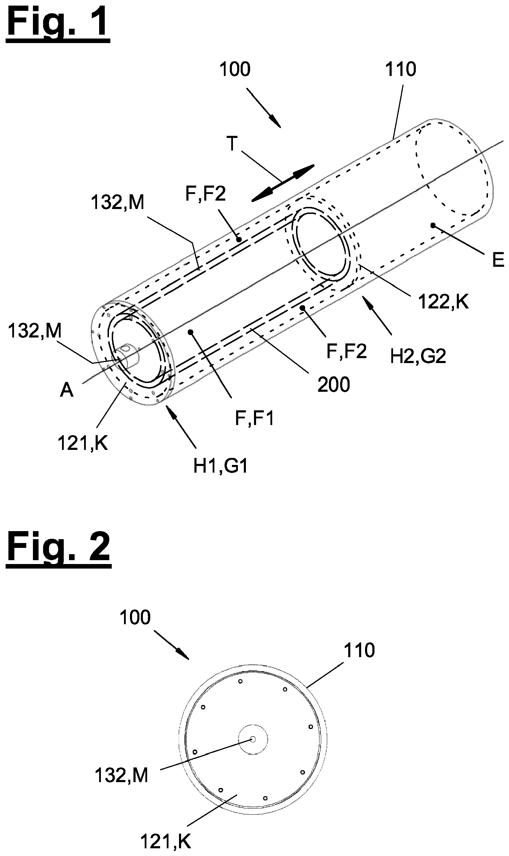

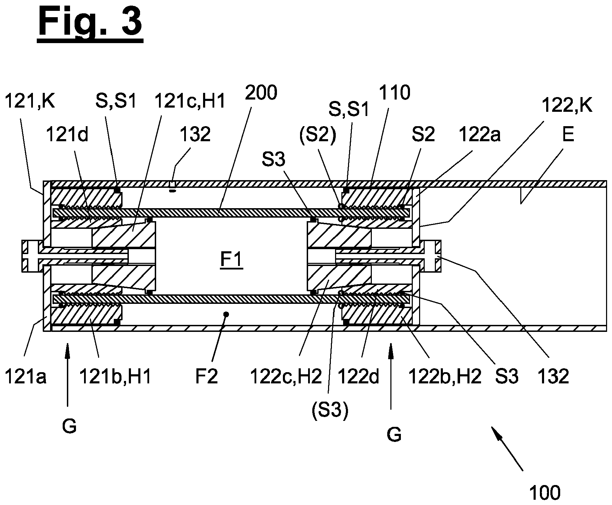

Fig. 1 zeigt eine perspektivische Ansicht einer ersten Ausführungsform der Materialprüfvorrichtung, insbesondere einer Ganzrohr-Zugprüfvorrichtung unter Verwendung von Flüssigkeitsdruck gemäß der vorliegenden Offenbarung. Abb. 2 ist eine Seitenansicht der ersten Ausführungsform der vorliegenden Offenbarung. Fig. 3 ist eine Schnittansicht (A-A') der ersten Ausführungsform der vorliegenden Offenbarung.

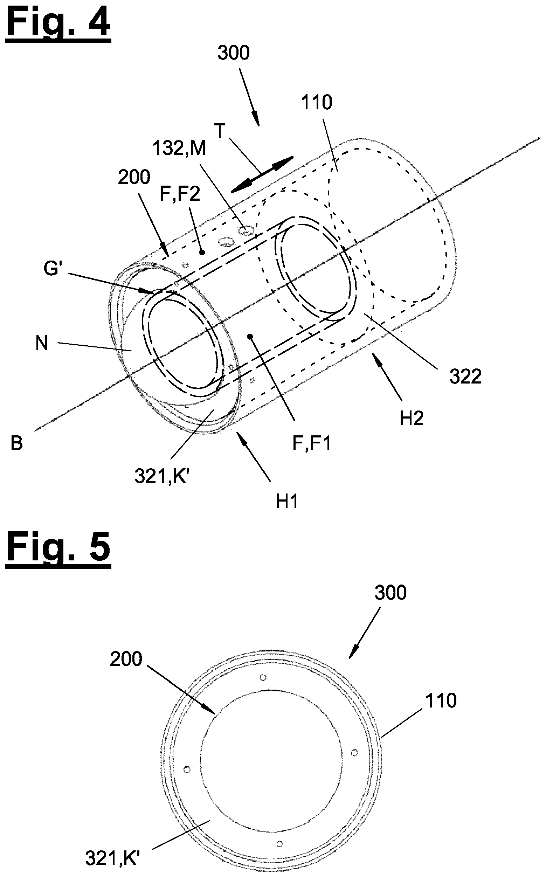

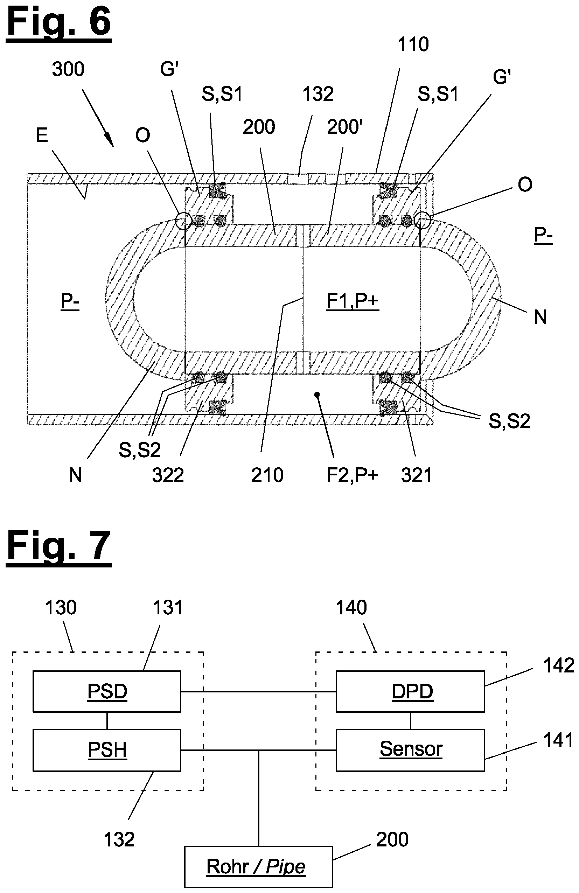

Fig. 4 zeigt eine perspektivische Ansicht einer zweiten Ausführungsform der Materialprüfvorrichtung, insbesondere einer Ganzrohr-Zugprüfvorrichtung unter Verwendung von Flüssigkeitsdruck gemäß der vorliegenden Offenbarung. Abb. 5 ist eine Seitenansicht der zweiten Ausführungsform der vorliegenden Offenbarung. Fig. 6 ist eine Schnittansicht (B-B') der zweiten Ausführungsform der vorliegenden Offenbarung.

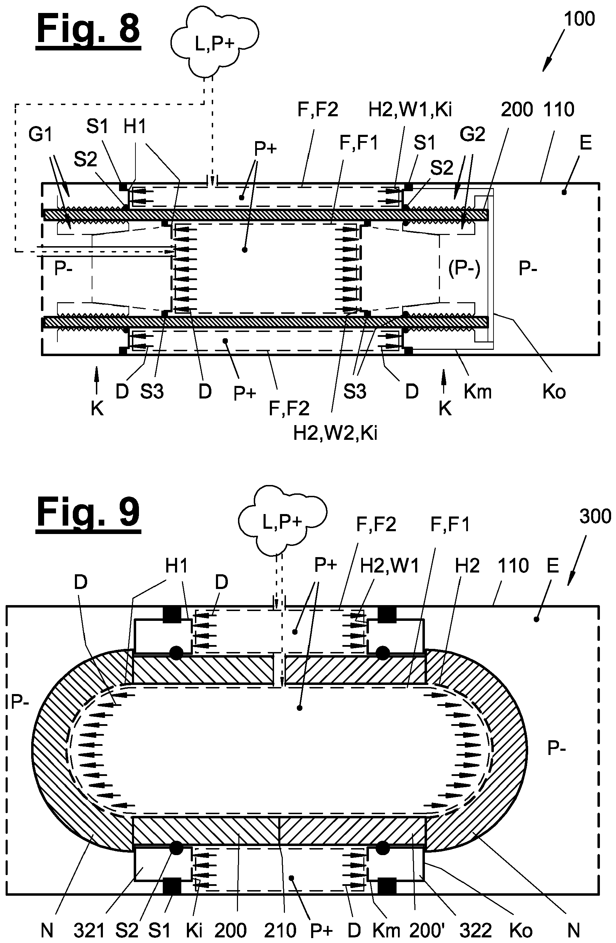

Fig. 7 zeigt ein Beispiel für die Druckversorgungseinheit und die Datenverarbeitungseinheit in der vorliegenden Offenbarung. Figuren 8 und 9 zeigen Erläuterungsdarstellungen zu den Auswirkungen des Überdrucks, der während der Durchführung einer Materialprüfung auf die Flüssigkeit in dem Hohlraum und in dem ringförmigen Volumen ausgewirkt wird, insbesondere die durch diesen Überdruck erzeugten Kräfte (D) in Axialrichtung (A, B), die auf die Abtrennungen (H1, H2) wirken und infolge der dortigen Festlegung der Endabschnitte des Probenkörpers (200) auf den Probenkörper (200) als Axial-Zugkräfte übertragen werden.

In der nachfolgenden Beschreibung wird davon ausgegangen, dass die Materialprüfvorrichtung im Einsatz ist und dass vom Verwender ein rohrförmiger Probenkörper, kurz das Rohr (200) zugeführt und in der vorgesehenen Montageposition befestigt worden ist. Die Materialprüfvorrichtung (100, 300) selbst bzw. der Probenträger (K, K`) selbst wird bei der Abgabe an den Kunden in der Regel keinen rohrförmigen Probenkörper umfassen.

Wie in den Fig. 1 bis 7 beschrieben, kann die gesamte Rohr-Zugprüfvorrichtung in der vorliegenden Offenbarung während der Durchführung einer Materialprüfung Folgendes umfassen:
das zu prüfende Rohr (200) als Probenkörper; das Gehäuse (110), das als Körper mit einer Gehäusepassage (E) ausgebildet ist, die das Rohr (200) umgibt;
mindestens einen Probenträger oder bevorzugt eine Probenträgereinheit. Die Probenträgereinheit kann gemäß dem Beispiel von Figur 1 - 3 eine Endkappeneinheit sein, umfassend die erste Endkappe (121), die an einem Ende des Rohrs (200) installiert und bevorzugt am Ende des Gehäuses (110) befestigt ist, um das Innere des Gehäuses (110) abzudichten, und die zweite Endkappe (122), die am gegenüberliegenden Ende des Rohrs (200) installiert ist, in Kontakt mit dem Inneren des Gehäuses (110) steht und sich entlang des Inneren des Gehäuses (110) verschieblich bewegen kann. Alternativ kann die Probenträgereinheit gemäß dem Beispiel von Figuren 4 - 6 eine Ring-Einheit sein, umfassend den ersten Probenträger-Ring (321), der an einem Ende des Rohrs (200) installiert ist, um das Innere des Gehäuses (110) abzudichten, und den zweiten Probenträger-Ring (322), der am gegenüberliegenden Ende des Rohrs (200) installiert ist und in Kontakt mit dem Inneren des Gehäuses (110) steht. Ein Probenträger-Ring (321 / 322) oder beide Probenträger-Ringe (321,322) können sich entlang des Inneren des Gehäuses (110) verschieblich bewegen.

Weiterhin kann die Materialprüfvorrichtung umfassen: die Druckversorgungseinheit (130), die die Druckversorgungsvorrichtung (131) umfasst, die unter Verwendung einer Flüssigkeit im Inneren des Gehäuses (110) Druck bereitstellt.

Weiterhin kann die Materialprüfvorrichtung umfassen: die Datenverarbeitungseinheit (140), die den Sensor (141) umfasst, der bevorzugt den Druck der Druckzufuhreinheit (130) misst, und oder den Sensor (141), der die Verschiebung des Rohrs (200) misst, und die Datenverarbeitungsvorrichtung (142), die bevorzugt numerische Daten von dem Sensor (141) empfängt und verarbeitet. Wie oben ausgeführt, kann der Sensor (141) einen beliebigen Parameter messen oder überwachen. Der Überdruck der Flüssigkeit und die Verschiebung des Rohrs sind nur bevorzugte Ausführungen für empfohlene Ausbildungen des Sensors (141).

Die Materialprüfvorrichtung, insbesondere die Ganzrohr-Zugprüfvorrichtung der vorliegenden Offenbarung ermöglicht es, das Rohr in seiner Gesamtheit ohne jegliche Bearbeitung zu verwenden, und die Zugprüfung wird im Inneren des Gehäuses (110) durchgeführt, d.h. innerhalb der Gehäusepassage (E). Verglichen mit der herkömmlichen Zugprüfungsmethode, bei der ein Teil des Rohrs als Coupon herausgeschnitten werden muss, um eine Probe zu erhalten, wird der Prüfvorgang vereinfacht, und es können genauere Daten gewonnen werden.

Das Rohr (200) kann im Inneren des Gehäuses (110) in der vorgesehenen Montageposition positioniert werden, wobei das Gehäuse den umschließenden Körper der Prüfvorrichtung bildet, der das ringförmige Volumen in Radialrichtung nach außen begrenzt. Das Rohr (200) kann zwischen zwei Probeträgern, insbesondere zwischen der ersten Endkappe (121) und der zweiten Endkappe (122) oder zwischen dem ersten Ring (321) und dem zweiten Ring (322) befestigt werden. Es ist alternativ möglich, die Materialprüfvorrichtung mit nur einem Probenträger (K, K`) auszubilden, der nur eine der Abtrennungen (H1 / H2) teilweise oder vollständig bildet, insbesondere die in Axialrichtung (A, B) verschiebliche Abtrennung (H2). Die andere Abtrennung, insbesondere eine am Gehäuse (110) fixierte Abtrennung (H1) kann beispielsweise durch eine Endplatte gebildet sein, an welcher der rohrförmige Probenkörper beispielsweise angeschweißt, angeklebt oder auf sonstige Weise einstückig angefügt ist.

Für die zügige Durchführung eines Materialprüfung ist es jedoch vorteilhaft, wenn die Materialprüfvorrichtung zwei Rohraufnahmen (G1, G2) aufweist, die dazu ausgebildet sind, jeweils einen Endabschnitt des Rohrs (200) an einer der Abtrennungen (H1, H2) festzulegen. Deshalb wird nachfolgend davon ausgegangen, dass die Materialprüfvorrichtung (100, 300) eine Probenträgereinheit mit mindestens zwei Probenträgern umfasst.

Ein erster Probenträger, insbesondere die erste Endkappe (121) kann auf einen Endabschnitt, kurz gesagt auf ein Ende des Rohrs (200) aufgesetzt und in Verbindung mit dem Ende des Gehäuses (110) befestigt werden und das Innere des Gehäuses (110) abdichten.

Ein zweiter Probenträger, insbesondere die zweite Endkappe (122) kann am gegenüberliegenden Ende des Rohrs (200) installiert werden, mit dem Inneren des Gehäuses (110) in Kontakt kommen und sich entlang des Inneren des Gehäuses (110) verschieblich bewegen.

Nachfolgend wird anhand der Figur 3 eine bevorzugte Ausbildung eines Probenträgers (K) erläutert.

Der Probenträger (K) umfasst eine Rohraufnahme (G), die dazu ausgebildet ist, den Endabschnitt des Probenkörpers (200) greifend aufzunehmen und zu halten und insbesondere eine Klemm-Rohraufnahme (G) bildet.

Figur 6 zeit eine andere bevorzugte Ausführung eines Probenträgers (K`). Auch dieser Probenträger (K`) umfasse eine Rohraufnahme (G`), wobei diese Rohraufnahme (G`) einen am Endabschnitt des Probenkörpers (200) in Radialrichtung überstehenden und mit dem Endabschnitt einstückig gefügten Bund (O) abzustützen und insbesondere eine Axialanschlag-Rohraufnahme (G`) bildet.

Der Bund (O) kann auf bliebige Weise hergestellt sein. In dem gezeigten Beispiel gemäß Figur 6 ist ein Stirnöffnung-Verschlusselement (N) an eine Stirnseite des rohrförmigen Probenkörpers einstückig angefügt. Das Stirnöffnung-Verschlusselement kann beispielsweise aus demselben Material bestehen wie das Rohr (200) selbst, oder aus einem kompatiblen Material, und es kann beispielsweise durch Schweißen oder Kleben einstückig angefügt sein.

Bei dem Stirnöffnung-Verschlusselement (N) könnte es sich auch um einen in der Praxis bekannten Rohrverschluss-Aufsatzstopfen für einen Innen-Überdruck Berstversuch handeln.

In beiden Ausführungsvarianten des Probenträgers (K, K`) gemäß Figuren 3 und 6 verfügt der Probenträger (K, K') über eine (erste) Dichtstruktur (S, S1), die an der Mantelfläche (Km) ausgebildet ist. In dem Beispiel von Figur 3 bildet der Flansch (121a) und/oder eine radiale Außenseite der Außenfassung (121b, 122b) die Mantelfläche (Km). Im Beispiel von Figur 3 ist die erste Dichtungsstruktur (S, S1) als ein Dichtkörper ausgebildet, bspw. als ein Dichtring, insbesondere ein Kunststoff- oder Gummi-Dichtring mit geeigneter Formgebung, der bevorzugt an einem geeignet geformten Ring-Aufnahmebereich an der Mantelfläche (Km) aufgesetzt ist.

Gemäß einer alternativen oder zusätzlichen Ausbildung (nicht dargestellt) kann die (erste) Dichtungsstruktur (S) eine Ringspaltdichtung sein, die durch einen Mikrospalt zwischen der radialen Außenkontur der Mantelfläche (Km) und der radialen Innenkontur der Gehäusepassage (E) gebildet ist. Eine solche Ringspaltdichtung kann ohne einen separaten Dichtungskörper oder in Ergänzung zu einem separaten Dichtungskörper vorgesehen sein. Die Ringspaltdichtung kann neben der Dichtungsfunktion eine Lager- und Führungsfunktion haben. Die Flüssigkeit (L) kann zumindest teilweise in den Mikrospalt eintreten und eine Schmierung bewirken. Alternativ kann in dem Mikrospalt ein separates Schmiermittel eingebracht sein. Der Probenträger (K, K`) kann insbesondere eine Schmiermittel-Zuführung für den Mikrospalt aufweisen.

Der Probenträger (K, K`) kann in jeder Ausführung, insbesondere in der Ausführung gemäß Figuren 1-3 sowie gemäß Figuren 4-6, eine zweite Dichtungsstruktur (S2) aufweisen, die dazu ausgebildet ist, in der vorgesehenen Montageposition eine Abdichtung zwischen dem Probenträger (K, K') und einer radialen Außenfläche des Probenkörpers (200) zu bewirken.

Weiterhin kann der Probenträger (K, K`) kann in jeder Ausführung, insbesondere in der Ausführung gemäß Figuren 1-3 sowie gemäß Figuren 4-6, einen (ersten) druckstabilen Wandungsabschnitt (W1) aufweisten der zumindest einen Teil der (zum Mittelbereich des Rohrs weisenden) Innenseite (Ki) des Probenträgers (K, K`) bildet und sich zwischen der ersten Dichtungsstruktur (S1), die an der Gehäusepassage (E) wirkt, und einer zweiten Dichtungsstruktur (S2), die an einer radialen Außenfläche des Probenkörpers (200) wirkt, erstreckt.

In dem Beispiel von Figur 1 -3 kann dieser erste Wandungsabschnitt (W1) durch die Außenfassung (121b, 122b) gebildet sein. Alternativ kann der Flansch (121a) den ersten Wandungsabschnitt (W1) teilweise oder vollständig bilden.

In dem Beispiel von Figur 4 - 6 wird der erste Wandungsabschnitt (W1) durch den Körper des Probenträger-Rings (321, 322) gebildet.

Wie in Figuren 7 und 8 gezeigt, liegt die mit Überdruck beaufschlagte Flüssigkeit (L), die in dem ringförmigen Volumen (F2) der Fluid-Druckkammer (F) enthalten ist, an dem ersten Wandungsabschnitt (W1) an. Deshalb wird auf von dieser Flüssigkeit (L) eine Kraft (D) auf den Probenträger (K, K`) ausgewirkt, die in der Axialrichtung (A, B) des Probenkörpers (200) bzw. parallel zur Erstreckung der Gehäusepassage (E) orientiert ist. Diese Kraft wird infolge der Festlegung des Endabschnitts des Rohrs (200) auf die Wandung des Rohrs (200) übertragen und wirkt dort als eine Zugkraft bzw. als eine entsprechender axialer Zugspannungsanteil in der Rohrwandung.

Nachfolgend wird die in Figur 3 gezeigte und bevorzugte Ausführung weiter erläutert. Der Probenträger (K) kann als eine Endkappe (K, 121, 122) ausgebildet sein, die eine Stirnfläche eines Hohlraums (F1) innerhalb des rohrförmigen Probenkörpers (200) übergreift und weiterhin eine Stirnfläche eines ringförmigen Volumens (F2) übergreift, das zwischen der radialen Außenfläche des Probenkörpers (200) und der Gehäusepassage (E) liegt.

In einem solchen Fall kann der Probenträger (K) bevorzugt eine weitere (dritte) Dichtungsstruktur (S3) aufweisen, die dazu ausgebildet ist, in der vorgesehenen Montageposition eine Abdichtung zwischen dem Probenträger (K, K') und einer radialen Innenfläche des Probenkörpers (200) zu bewirken.

Es kann ferner bevorzugt vorgesehen sein, dass ein als Endkappe (121, 122) ausgebildeter Probenträger (K) eine Rohraufnahme (G2) umfasst, wobei diese Rohraufnahme (G2) eine Außenfassung (121b) und eine Innenfassung (121c) aufweist, zwischen denen der Endabschnitt des Probenkörpers klemmend greifbar ist.

Der Probenträger (K) kann besonders bevorzugt einen Schrägwandkörper (121d) umfassen, der dazu ausgebildet ist, während der Durchführung eines Materialtests mit einer unter Überdruck (P+) stehenden Flüssigkeit (L) an der Innenseite (Ki) des Probenträgers (K) beaufschlagt zu werden und aus der Druckbeaufschlagung eine Betätigung oder Steigerung der Greifwirkung herbeizuführen, mit welcher die Rohraufnahme (G, G2) den Endabschnitt des Probenkörpers (200) festlegt.

In dem Beispiel gemäß Figur 3, auf das nachfolgend im Detail eingegangen wird, ist der Schrägwandkörper (121d) ein einem Hohlraum des Probenkörpers (200) angeordnet und wirkt über seine schräge Wandung auf einen Teil der Innenfassung (121d) ein. Die vorliegende Offenbarung ist jedoch hierauf nicht beschränkt. Der Schrägwandkörper kann einfach oder mehrfach angeordnet sein. Er kann im Bereich des Hohlraums (F1) oder im Bereich des ringförmigen Volumens (F2) angeordnet sein. Er kann direkt auf die Innenfassung oder die Außenfassung wirken oder er kann in beliebiger anderer Form - auch indirekt - eine Betätigung oder Steigerung der Greifwirkung herbeizuführen, mit welcher die Rohraufnahme (G, G2) den Endabschnitt des Probenkörpers (200) festlegt.

Gemäß einer ersten Variante kann also der Schrägwandkörper (121d) in der vorgesehenen Montageposition in Flucht mit dem Hohlraum (F1) des Probenkörpers (200) angeordnet und dazu eingerichtet ist, während der Durchführung eines Materialtests mit einer unter Überdruck (P+) stehenden Flüssigkeit im Hohlraum (F1) beaufschlagt zu werden und aus einer Kraft (D), die durch den Überdruck (P+) erzeugt ist, die Innenfassung (121c) gegen die radiale Innenfläche des Probenkörpers (200) pressen.

Gemäß einer zweiten Variante (nicht dargestellt) kann der Schrägwandkörper in der vorgesehenen Montageposition in Flucht mit dem ringförmigen Volumen (F2) zwischen dem Probenkörper (200) und der umgebenden Gehäusepassage (E) angeordnet und dazu eingerichtet sein, während der Durchführung eines Materialtests mit einer unter Überdruck (P+) stehenden Flüssigkeit in dem ringförmigen Volumen (F2) beaufschlagt zu werden und aus einer Kraft (D), die durch den Überdruck (P+) erzeugt ist, die Außenfassung (121b) gegen die radiale Außenfläche des Probenkörpers (200) zu pressen.

Die Kraft (D), die auf den Schrägwandkörper wirkt, kann auch als eine Kraft wirken, welche die Abtrennung (H1, H2) in der Axialrichtung (A, B) nach außen drängt - vgl. Figur 7: Pfeile für Kraft (D) in Hohlraum (F1) - und die gemäß der Festlegung des Rohrs (200) an dieser Abtrennung (H1, H2) als eine Zugkraft auf das Rohr (200) übertragen wird. Diese Kraft wirkt dort ebenfalls als eine Zugkraft bzw. als ein entsprechender axialer Zugspannungsanteil in der Rohrwandung.

Auch in einem Fall, in dem kein Schrägwandkörper im Hohlraum (F1) vorliegt, kann der Probenträger (K) bevorzugt einen (zweiten) druckstabilen Wandungsabschnitt (W2) aufweisen der zumindest einen Teil der Innenseite (Ki) des Probenträgers (K, K') bildet und bevorzugt einen Raum innerhalb einer Dichtungsstruktur (S3) übergreift, die an einer radialen Innenfläche des Probenkörpers (200) wirkt. Ein solcher (zweiter) druckstabiler Wandungsabschnitt (W2) kann an dem Flansch (121a) und/oder an der Innenfassung (121c) vorliegen, wobei dort analog zu den obigen Ausführungen eine Kraft (D) in Axialrichtung wirkt, die zu einer Zugkraft bzw. einer anteiligen Zugspannung in dem Probenkörper (200) führt.

Die erste Endkappe (121) des Probenträgers (K) gemäß Figur 3 kann an einem Ende des Rohrs (200) angebracht werden und mit dem einen Ende des Gehäuses (110) mittels einer Außenfassung (121b) verbunden werden.

Die erste Endkappe (121) kann umfassen
einen Flansch (121a), der das Innere des Gehäuses (110) abdichtet;
eine Außenfassung (121b), die bevorzugt mit dem Flansch (121a) verbunden ist und sich zwischen dem Gehäuse (110) und dem Rohr (200) befindet;
eine Innenfassung (121c), die das Innere des Rohres (200) berührt und bevorzugt in einen in der Mitte des Flansches (121a) ausgebildeten Vorsprung eingesetzt ist - alternativ kann die Innenfassung (121c) auf beliebige andere Weise mit dem Flansch (121a) verbunden sein;
und einen Schrägwandkörper (121d), der sich zwischen der Innenfassung (121c) und dem Rohr (200) befindet;

Die zweite Endkappe (122) kann dieselbe oder eine andere Ausbildung haben. Sie kann am gegenüberliegenden Ende des Rohrs (200) installiert werden und ist bevorzugt mit der Außenfassung (122b) verbunden.

Die zweite Endkappe kann umfassen
einen Flansch (122a), der das Innere des Gehäuses (110) berührt;
eine Außenfassung (122b), die mit dem Flansch (122a) verbunden ist und sich zwischen dem Gehäuse (110) und dem Rohr (200) befindet;
eine Innenfassung (122c), die bevorzugt in einen in der Mitte des Flansches (122a) ausgebildeten Vorsprung eingesetzt ist und das Innere des Rohres (200) berührt;
und einen Schrägwandkörper (122d), der sich bevorzugt zwischen der Innenfassung (122c) und dem Rohr (200) befindet.

Alle oben für die erste Endkappe (121) erläuterten Merkmale können in gleicher Weise für die zweite Endkappe (122) zutreffen.

Wenn der Überdruck der Flüssigkeit (L) auf das Rohr (200) ausgeübt wird, dehnt es sich infolge der von innen und außen auf die radialen Wandungen wirkenden Kräfte nicht in Querrichtung aus. Der Druck, der auf den Querschnitt der ersten und der zweiten Abtrennung (H1, H2), insbesondere den ersten und den zweiten Probenträger (K), weiter insbesondere auf den Querschnitt der ersten Endkappe (121) und der zweiten Endkappe (122) einwirkt, bewirkt, dass sich der verschiebliche Probenträger, insbesondere die zweite Endkappe (122) entlang der Gehäusepassage (E) des Gehäuses (110) bewegt und eine axiale Verschiebung und insbesondere eine Dehnung des Rohrs (200) bewirkt. Dies ermöglicht die Durchführung eines Zugversuchs am Rohr (200).

Das Rohr (200) wird im Gehäuse (110) in der vorgesehenen Montageposition positioniert, und der Flansch (121a) wird an einem Ende des Rohrs (200) angebracht. Der Flansch (121a) wird sicher befestigt, indem er sowohl mit dem einen Ende des Gehäuses (110) als auch mit der Rohraufnahme, insbesondere mit einer Außenfassung (121b) verbunden wird, wodurch das Innere des Gehäuses (110) abgedichtet werden kann.

Am anderen Ende des Rohrs (200) ist ein Flansch (122a) angebracht, der mit der Außenfassung (122b) verbunden ist. Er kann mit dem Inneren des Gehäuses (110) in Kontakt kommen und sich entlang des Inneren des Gehäuses (110) bewegen.

Im Inneren des Rohrs (200) können Innenfassung (121c), Schrägwandkörper (121d), Innenfassung (122c) und Schrägwandkörper (122d) angeordnet sein. Zwischen dem Gehäuse (110) und dem Rohr (200) können die Außenfassung (121b) und die Außenfassung (122b) angeordnet sein.

Die Innenfassungen (121c, 122c) können an ihren Seitenflächen Nuten aufweisen, in die die Vorsprünge der jeweiligen Flansche (121a, 122a) eingeführt werden. Die Ober- und Unterseiten der Innenfassungen (121c, 122c) können geneigt sein. Mit anderen Worten können die Innenfassungen (121c, 122c) eine Form haben, bei der der Durchmesser in dem an die Mitte des Rohrs (200) angrenzenden Abschnitt größer ist und in dem an die Flansche (121a, 122a) angrenzenden Abschnitt allmählich abnimmt.

Ein Ende der Innenfassungen (121c, 122c) mit einem größeren Durchmesser kann in Kontakt mit der Innenseite des Rohrs (200) kommen, während das andere Ende mit einem kleineren Durchmesser in Kontakt mit den Schrägwandkörpern (121d, 122d) kommen kann.

Die Innenfassungen (121c, 122c) können an ihren Außenflächen mit einer (dritten) Dichtungsstruktur (S, S3), insbesondere in Form von Dichtungselementen ausgestattet sein, um ein Entweichen des angelegten Überdrucksund der Flüssigkeit (L) zu verhindern.

Die Schrägwandkörper (121d, 122d) können zwischen den Innenfassungen (121c, 122c) und dem Rohr (200) angebracht werden. Die obere, d.h. die in Radialrichtung nach außen weisende Fläche der Schrägwandkörper kann das Rohr (200) berühren, und die in Axialrichtung anschließende Fläche der Schrägwandkörper kann so geneigt sein, dass sie der geneigten Fläche der Innenfassungen (121c, 122c) entspricht. Mit anderen Worten können die Schrägwandkörper (121d, 122d) eine Dicke aufweisen, die in Richtung der an die Flansche (121a, 122a) angrenzenden Abschnitte allmählich zunimmt, während sie in den an die Mitte des Rohrs (200) angrenzenden Abschnitten eine geringere Dicke aufweisen.

Die Außenfassungen (121b, 122b) können zwischen dem Gehäuse (110) und dem Rohr (200) angeordnet werden, um das Rohr (200) zu sichern. Wenn Überdruck ausgeübt wird, kann er die zur radialen Außenseite gerichtete Bewegung und Ausdehnung des Rohrs (200) einschränken.

Die Außenfassungen (121b, 122b) können an ihrer radialen Außenfläche die (erste) Dichtungsstruktur aufweisen und insbesondere mit Dichtungselementen versehen sein, die ein Entweichen des aufgebrachten Überdrucks und der Flüssigkeit (L) verhindern.

Wenn Überdruck auf die Innen- und Außenseite des Rohrs (200) ausgeübt wird, bewegen sich die Innenfassungen (121c, 122c) aufgrund des ausgeübten Drucks in Richtung des Flansches (121a, 122a), der sich am Ende des Rohrs (200) befindet. Während dieser Bewegung gleiten die Innenfassungen (121c, 122c) entlang der schrägen Fläche der Schrägwandkörper (121d, 122d) und üben eine starke Druckkraft auf die Schrägwandkörper (121d, 122d) aus.

Der erste Schrägwandkörper (121d) wird von der Innenfassung (121b), die sich zwischen dem Gehäuse (110) und dem Rohr (200) befindet, fest abgestützt. Wenn der Druck steigt, werden die Außenfassung (121b), das Rohr (200) und der Schrägwandkörper (121d) stark und fest am Gehäuse (110) gesichert. Das Rohr (200) bleibt in fester Verbindung mit dem Gehäuse (110), der Außenfassung (121b) und dem Flansch (121a), sein Endabschnitt ist also an Ort und Stelle fixiert und die Rohraufnahme verhindert jede Bewegung.

Der zweite Schrägwandkörper (122d) wird von der zweiten Außenfassung (122b), die sich zwischen dem Gehäuse (110) und dem Rohr (200) befindet, fest abgestützt. Wenn der Druck steigt, werden die Außenfassung (122b), das Rohr (200) und der Schrägwandkörper (122d) fest miteinander verbunden, so dass das Rohr (200) zusammen mit der Außenfassung (122b) und dem Flansch (122a) fixiert wird.

Aufgrund des Überdrucks, der auf den Querschnitt der Innenfassung (122c) wirkt, bewegt sich die zweite Endkappe (122) in der Gehäusepassage (E) des Gehäuses (110), was eine axiale Verschiebung des Endabschnitts des Rohrs (200) bewirkt. Dies ermöglicht die Durchführung eines Zugversuchs an dem Rohr (200) (Abb. 3).

Das Gehäuse (110), der erste Probenträger, insbesondere die erste Endkappe (121) und der zweite Probenträger, insbesondere die zweite Endkappe (122) können eine oder mehrere Druckzuführungsöffnungen (132) aufweisen, um Druck von der Druckzuführungseinheit (130) bereitzustellen. Die Druckzuführungsöffnungen (132) können einzeln oder gemeinsam ein Bestandteil der Liquid-Zuführung (M) sein oder diese bilden. Die Druckzuführungsöffnung(en) kann oder können auch zur Entlüftung oder zur Entleerung der Flüssigkeit nach Abschluss der Materialprüfung genutzt werden.

Der durch die Druckzufuhrvorrichtung (131) der Druckzufuhreinheit (130) aufgebrachte Überdruck wird der Flüssigkeit im Inneren des Gehäuses (110), nämlich dem Fluid-Druckkammer (F) mit Kontakt zu dem Inneren und dem Äußeren des Rohrs (200) durch die Druckzufuhrlöcher (132) zugeführt. Dies ermöglicht die Durchführung von Zugversuchen an dem Rohr (200).

Der (erste) Flansch (121a) kann mit dem Gehäuse (110) und der Außenfassung (121b) auf beliebige Wiese, insbesondere mit Hilfe von Bolzen, Schellen oder ähnlichen Mitteln verbunden werden. Und der (zweite) Flansch (122a) kann mit der Außenfassung (122b) durch beliebige Mittel, insbesondere durch Schrauben, Schellen oder ähnliche Mittel verbunden werden.

Die radiale Innenfläche der Außenfassung (121b, 122b) und/oder die radiale Außenfläche der Innenfassung (121c, 122c) können eine mit Rillen strukturiere Form, d.h. eine die Greifwirkung erhöhende Oberflächenstruktur, insbesondere umfassend eine gewellte Form aufweisen. Diese Oberflächenstruktur, insbesondere die Wellenform der Rillen kann das Rohr (200) fest fixieren und so die Bewegung des Rohrs (200) durch Druckeinwirkung verhindern. Sie kann bevorzugt ein Bestandteil der Klemm-Rohraufnahme sein. Eine bevorzugte Ausführung sieht vor, dass die eine Greifwirkung erhöhende Oberflächenstruktur in der Axialrichtung des Probenkörpers (200) benachbart zu der (zweiten oder dritten) Dichtungsstruktur (S2, S3) angeordnet ist, wobei insbesondere die (zweite oder dritte) Dichtungsstruktur (S2, S3) weiter zum Mittelbereich des Probenkörpers (200) hin angeordnet ist. Eine solche Anordnung ist in Figur 8 für die zweite und die dritte Dichtungsstruktur (S2, S3) gezeigt. Diese Anordnung ist ferner in Figur 3 für die zweite Dichtungsstruktur (S2) durch eine Umrissdarstellung des Dichtungsstruktur skizziert. Durch diese Anordnung - Dichtungsstruktur (S2, S3) ist bezogen auf die Axialrichtung (A) des Probenkörpers (200) in Druck-Wirkrichtung VOR der die Greifwirkung erhöhenden Oberflächenstruktur angeordnet - wird die (zweite oder dritte) Dichtungsstruktur, die an den radialen Außenwandung oder an der radialen Innenwandung des Probenkörpers (200) wirkt, die Flüssigkeit in der Fluid-Druckkammer (F) von der die Greifwirkung erhöhenden Oberflächenstruktur trennen. Auf diese Weise wird ein parasitärer Effekt auf die Oberflächenstruktur vermindert oder verhindert, der sich aus einer Wechselwirkung der Flüssigkeit (L) mit der die Greifwirkung erhöhenden Oberflächenstruktur etwaig ergeben könnte. Gemäß einer alternativen Ausführung kann die (zweite oder dritte) Dichtungsstruktur (S2, S3) weiter zum Endabschnitt des Probenkörpers (200) hin angeordnet ist sein. Dies ist in Figur 3 für die zweite und dritte Dichtungsstruktur (S2, S3) durch eine schwarze Fläche dargestellt. Durch diese Anordnung - Dichtungsstruktur (S2, S3) ist bezogen auf die Axialrichtung (A) des Probenkörpers (200) in Druck-Wirkrichtung HINTER der die Greifwirkung erhöhenden Oberflächenstruktur angeordnet - wird erreicht, dass die jeweilige Dichtungsstruktur bei der Montage nur ein vergleichbar kurzes Wegstück in der Axialrichtung über die radiale Außenwandung oder radiale Innenwandung geschoben werden muss. Dies ist insbesondere dann vorteilhaft, wenn die Materialprüfung von ungeübtem Personal durchgeführt wird, das etwaig einen Probenträger in der Vorbereitung des Tests wiederholt über den Endabschnitt des Probenkörpers schiebt und wieder abnimmt. Denn so wird die Dichtungsstruktur nicht über eine sich eventuell auf den Außenwandung des Probenkörpers einprägende Rillenstruktur geschoben, sodass parasitäre Effekte vermindert oder verhindert werden, die aus einer Beschädigung der Dichtungsstruktur (S2, S3) entstehen könnten.

Mit anderen Worten kann eine Klemm-Rohraufnahme (G) eine Außenfassung (121b) und/oder eine Innenfassung (121c) aufweisen, wobei weiter bevorzugt die Außenfassung (121b) eine (erste) die Greifwirkung erhöhende Oberflächenstruktur aufweist und/oder die Innenfassung (121c) eine (zweite) die Greifwirkung erhöhende Oberflächenstruktur aufweist.

An der Außenfassung kann eine zweite Dichtungsstruktur (S2), die gegenüber einer radialen Außenwandung des Probenträgers (200) wirkt, bezogen auf die Axialrichtung (A) des Probenkörpers (200) in Druck-Wirkrichtung vor oder hinter der (ersten) die Greifwirkung erhöhenden Oberflächenstruktur angeordnet sein.

An der Innenfassung kann eine dritte Dichtungsstruktur (S3), die gegenüber einer radialen Innenwandung des Probenträgers (200) wirkt, bezogen auf die Axialrichtung (A) des Probenkörpers (200) in Druck-Wirkrichtung vor oder hinter der (zweiten) die Greifwirkung erhöhenden Oberflächenstruktur angeordnet sein.

Figuren 4 - 6 zeigen eine Variante eines Probenträgers (K`), die als ein Probenträger-Ring (K') ausgebildet ist, der eine Stirnfläche eines ringförmigen Volumens (F2) übergreift, das zwischen der radialen Außenfläche des Probenkörpers (200) und der Gehäusepassage (E) liegt, und wobei der Probenträger-Ring (K') dazu ausgebildet ist, mit einem Stirnöffnung-Verschlusselement (N) zusammenzuwirken. Das Stirnöffnung-Verschlusselement (N) kann an einem Endabschnitt des rohrförmigen Probenkörpers (200) vorliegen und beispielsweise einstückig anfügbar oder einstückig angefügt sein, um eine Stirnfläche des Hohlraums (F1) innerhalb des rohrförmigen Probenkörpers (200) zu übergreifen und druckdicht zu verschließen. Alternativ kann das Stirnöffnung-Verschlusselement (N) an einem Endabschnitt des rohrförmigen Probenkörpers (200) aufgesetzt und fixiert sein, wobei ein Radialbund (O) gebildet wird, der in Radialrichtung über eine radiale Wandung des Probenkörpers (200) übersteht.

Die in der vorliegenden Offenbarung beschriebene Zugprüfvorrichtung kann verwendet werden, wenn beide Enden des Rohrs (200) offen sind. Wenn beide Enden des Rohrs (200) geschlossen sind, wie in den Fig. 4 bis 6 gezeigt, wird in der Mitte des ersten Probenkörper-Rings (321) und des zweiten Probenkörper-Rings (322) ein Loch zum Einführen des Rohrs (200) gebildet, und das Rohr (200) kann in das Loch eingeführt und befestigt werden. Die Befestigung kann auf beliebige Weise erfolgen.

Bevorzugt umfasst ein Probenkörper-Ring (321, 322) eine Axialanschlag-Rohraufnahme (G`), die dazu ausgebildet ist, einen am Endabschnitt des Probenkörpers (200) in Radialrichtung überstehenden und bevorzugt mit dem Endabschnitt einstückig gefügten Bund (O) abzustützen.

Durch die oben erläuterten Maßnahmen kann die Materialprüfvorrichtung, insbesondere die Ganzrohr-Zugprüfvorrichtung der vorliegenden Offenbarung sicher an Rohre (200) verschiedener Formen befestigt werden. Dies ermöglicht die Prüfung eines breiteren Spektrums von Rohrkonfigurationen (200) und maximiert die Vielseitigkeit der Vorrichtung.

Die vorliegende Offenbarung kann sowohl in Fällen verwendet werden, in denen das Rohr (200) Löcher hat, als auch in Fällen, in denen es keine Löcher hat.

In dem Fall, in dem das Rohr (200) keine Löcher aufweist, können das Gehäuse (110), die erste Abtrennung / der erste Probenträger / die erste Endkappe (121) und die zweite Abtrennung / der zweite Probenträger / die zweite Endkappe (122) jeweils Druckzuführungslöcher (132) aufweisen, die so ausgebildet sind, dass sie mit Überdruck beaufschlagte Flüssigkeit (L) für den Zugversuch bereitstellen.

Die im Gehäuse (110) ausgebildete Druckzuführungsöffnung (132) versorgt das Rohr (200) mit externem Druck, während die in den Abtrennungen, insbesondere in der ersten Endkappe (121) und der zweiten Endkappe (122) ausgebildete Druckzuführungsöffnung (132) das Rohr (200) mit internem Druck versorgt, um den Zugversuch durchzuführen. Der äußere und der innere Druck, die auf das Rohr (200) ausgeübt werden, können gleich oder unterschiedlich sein, je nach Zweck der Zugprüfung.

In dem Fall, in dem das Rohr (200) ein Loch hat, liefert das im Gehäuse (110) ausgebildete Druckzuführungsloch (132) oder das in einer Abtrennung (H1, H2), insbesondere in einer Endkappe (121, 122) vorgesehene Druckzuführungsloch (132) den Druck bzw. die mit Überdruck beaufschlagte Flüssigkeit (L) für die Durchführung des Zugversuchs.

Der Druck für die Durchführung des Zugversuchs am Rohr (200) wird besonders bevorzugt durch die im Gehäuse (110) ausgebildete Druckzufuhröffnung (132) zugeführt. Da in diesem Fall nur eine Druckzuführungsbohrung (132) verwendet wird, werden sowohl interne als auch externe und mit Überdruck beaufschlagte Flüssigkeit (L) gleichzeitig zugeführt.

Wie in Fig. 7 beschrieben, kann die Datenverarbeitungseinheit (140) den Sensor (141) zum Messen von Druckdaten von der Druckzufuhreinheit (130) und der Verschiebung des Rohrs (200) sowie eine Datenverarbeitungsvorrichtung (142) enthalten, die bevorzugt numerische Daten vom Sensor (141) empfängt und verarbeitet.

Die Datenverarbeitungseinheit (140) empfängt Daten, bevorzugt numerische Daten, die von dem Sensor (141) erhalten werden, der die von der Druckversorgungseinrichtung (131) der Druckversorgungseinheit (130) gelieferten Druckdaten und/oder die Verschiebung des Rohres (200) innerhalb des Gehäuses (110) misst. Die empfangenen Daten werden von der Datenverarbeitungseinrichtung (142) verarbeitet und können dem Verwender beispielsweise grafisch dargestellt oder digital verarbeitet werden.

### Bezugszeichen

- 100: Materialprüfvorrichtung
- 110: Gehäuse, druckstabil
- 121: Erste Endkappe
- 121a: Flansch
- 121b: Außenfassung
- 121c: Innenfassung
- 121d: Schrägwandkörper
- 122: Zweite Endkappe
- 122a: Flansch
- 122b: Außenfassung
- 122c: Innenfassung
- 122d: Schrägwandkörper
- 130: Druckversorgungseinheit
- 131: Druckversorgungsvorrichtung (PSD)
- 132: Druckzuführungsöffnung (PSH)
- 140: Datenverarbeitungseinheit
- 141: Sensor
- 142: Datenverarbeitungsvorrichtung (DPD)
- 200: Rohrförmiger Probenkörper / zu testendes Rohr;
- 200': Rohrförmiger Probenkörper / zu testendes Rohr;
- 210: Fügestelle / Übergangsbereich zwischen Rohrteilen
- 300: Materialprüfvorrichtung
- 321: Erster Ring / Erster Probenträger-Ring
- 322: Zweiter Ring / Zweiter Probenträger-Ring
- A: Achse / Mittelachse / Axialrichtung
- B: Achse / Mittelachse / Axialrichtung
- D: Kraft in Axialrichtung
- E: Gehäusepassage
- F: Fluid-Druckkammer
- F1: Hohlraum im Rohr
- F2: Ringförmiges Volumen (zwischen Rohr und Gehäuse)
- G: Rohraufnahme, greifend / Klemm-Rohraufnahme
- G': Rohraufnahme, in Anlage-Abstützung an Radialbund / Axialanschlag-Rohraufnahme
- G1: Erste Rohraufnahme
- G2: Zweite Rohraufnahme
- H1: Erste Abtrennung
- H2: Zweite Abtrennung
- K: Probenträger / Endkappe
- K': Probenträger / Probenträger-Ring
- Ki: Innenseite / Innenfläche des Probenträgers
- Km: Mantelfläche des Probenträgers
- Ko: Außenseite / Außenfläche des Probenträgers
- L: Flüssigkeit
- M: Liquid-Zuführung
- N: Stirnöffnung-Verschlusselement, zum einstückigen Anfügen
- O: Bund / Radialbund
- P+: Überdruck / Druck
- P-: Umgebungsdruck / Niederdruckbereich
- S: Dichtungsstruktur
- S1: Erste Dichtungsstruktur (gegenüber Gehäusepassage)
- S2: Zweite Dichtungsstruktur (gegenüber radialer Außenfläche des Rohrs)
- S3: Dritte Dichtungsstruktur (gegenüber radialer Innenfläche des Rohrs)
- T: Verschiebung

## Patentansprüche

1. Probenträger (K, K') zur Aufnahme eines Endabschnitts eines rohrförmigen Probenkörpers (200) für die Durchführung eines Belastbarkeitstests, wobei der Probenträger (K, K`) eine Innenseite (Ki) hat, die in der vorgesehenen Montageposition zu einem Mittelbereich des zu testenden Probenkörpers (200) hin orientiert ist, sowie eine in der Axialrichtung (A, B) des Probenkörpers (200) entgegengesetzte Außenseite (Ko) und zwischen Innenseite und Außenseite eine Mantelfläche (Km), und wobei der Probenträger (K, K`) aufweist:
- eine Rohraufnahme (G, G2, G`), die dazu ausgebildet ist, den Endabschnitt des Probenkörpers (200) an dem Probenträger (K) festzulegen;
**dadurch gekennzeichnet, dass**
- der Probenträger (K, K') dazu ausgebildet ist, in einer umgebenden Gehäusepassage (E) mit einem ringförmigen Kontakt gegenüber der Gehäusepassage (E) aufgenommen zu werden, und
- dass der Probenträger (K, K`) weiterhin eine ringförmige Dichtungsstruktur (S, S1) aufweist, die an der Mantelfläche (Km) des Probenträgers (K, K`) angeordnet ist, wobei die Dichtungsstruktur (S, S1) dazu ausgebildet ist,
· eine ringförmige Abdichtung gegenüber der Gehäusepassage (E) zu bilden und
· eine Verschiebung (T) des Probenträgers (K, K`) in der Axialrichtung (A, B) entlang der Gehäusepassage (E) zuzulassen.

2. Probenträger (K, K`) nach dem vorhergehenden Anspruch, wobei,
- die Rohraufnahme dazu ausgebildet ist, den Endabschnitt des Probenkörpers (200) greifend aufzunehmen und zu halten und insbesondere eine Klemm-Rohraufnahme (G) bildet; UND/ODER
- die Rohraufnahme dazu ausgebildet ist, einen am Endabschnitt des Probenkörpers (200) in Radialrichtung überstehenden und mit dem Endabschnitt bevorzugt einstückig gefügten Bund (O) abzustützen und insbesondere eine Axialanschlag-Rohraufnahme (G`) bildet.

3. Probenträger (K, K`) nach einem der vorhergehenden Ansprüche, wobei die Dichtungsstruktur (S, S1) an der Mantelfläche (Km) ausgebildet ist durch
- einen Dichtkörper; UND/ODER
- eine Ringspaltdichtung, die durch einen Mikrospalt zwischen der radialen Außenkontur der Mantelfläche (Km) und der radialen Innenkontur der Gehäusepassage (E) gebildet ist.

4. Probenträger (K, K') nach einem der vorhergehenden Ansprüche, wobei der Probenträger (K, K`) eine zweite Dichtungsstruktur (S2) aufweist, die dazu ausgebildet ist, in der vorgesehenen Montageposition eine Abdichtung zwischen dem Probenträger (K, K') und einer radialen Außenfläche des Probenkörpers (200) zu bewirken.

5. Probenträger (K, K') nach einem der vorhergehenden Ansprüche 3 oder 4, wobei der Probenträger (K)
- einen druckstabilen Wandungsabschnitt (W1) aufweist, der zumindest einen Teil der Innenseite (Ki) des Probenträgers (K, K') bildet und sich zwischen der ersten Dichtungsstruktur (S1), die an der Gehäusepassage (E) wirkt, und einer zweiten Dichtungsstruktur (S2), die an einer radialen Außenfläche des Probenkörpers (200) wirkt, erstreckt; UND/ODER
- als eine Endkappe (K, 121, 122) ausgebildet ist, die eine Stirnfläche eines Hohlraums (F1) innerhalb des rohrförmigen Probenkörpers (200) übergreift und weiterhin eine Stirnfläche eines ringförmigen Volumens (F2) übergreift, das zwischen der radialen Außenfläche des Probenkörpers (200) und der Gehäusepassage (E) liegt; UND/ODER
- eine weitere Dichtungsstruktur (S3) aufweist, die dazu ausgebildet ist, in der vorgesehenen Montageposition eine Abdichtung zwischen dem Probenträger (K, K') und einer radialen Innenfläche des Probenkörpers (200) zu bewirken.

6. Probenträger (K) nach einem der vorhergehenden Ansprüche, wobei die Rohraufnahme (G2) eine Außenfassung (121b) und eine Innenfassung (121c) aufweist, zwischen denen der Endabschnitt des Probenkörpers klemmend greifbar ist.

7. Probenträger (K) nach einem der vorhergehenden Ansprüche, wobei der Probenträger (K) mindestens einen Schrägwandkörper (121d) umfasst, der dazu ausgebildet ist, während der Durchführung eines Materialtests mit einer unter Überdruck (P+) stehenden Flüssigkeit (L) an der Innenseite (Ki) des Probenträgers (K) beaufschlagt zu werden und aus der Druckbeaufschlagung eine Betätigung oder Steigerung der Greifwirkung herbeizuführen, mit welcher die Rohraufnahme (G, G2) den Endabschnitt des Probenkörpers (200) festlegt.

8. Probenträger (K, K') nach einem der vorhergehenden Ansprüche 1 bis 4, wobei der Probenträger als ein Probenträger-Ring (K') ausgebildet ist, der eine Stirnfläche eines ringförmigen Volumens (F2) übergreift, das zwischen der radialen Außenfläche des Probenkörpers (200) und der Gehäusepassage (E) liegt, und wobei der Probenträger-Ring (K') dazu ausgebildet ist, mit einem Stirnöffnung-Verschlusselement (N) zusammenzuwirken, wobei das Stirnöffnung-Verschlusselement (N) insbesondere an einem Endabschnitt des rohrförmigen Probenkörpers (200) einstückig anfügbar oder einstückig angefügt ist, um eine Stirnfläche eines Hohlraums (F1) innerhalb des rohrförmigen Probenkörpers (200) zu übergreifen und druckdicht zu verschließen.

9. Materialprüfvorrichtung für die Durchführung eines Belastbarkeitstests an einem rohrförmigen Probenkörper (200), wobei die Materialprüfvorrichtung (100) umfasst:
- Ein druckstabiles Gehäuse (110) mit einer Gehäusepassage (E);
- Innerhalb eines Teils der Gehäusepassage (E) eine abgetrennte oder abtrennbare Fluid-Druckkammer (F), in welcher der rohrförmige Probenkörper (200) in einer vorgesehenen Montageposition einbringbar ist, wobei die Fluid-Druckkammer (F) einerseits einen Hohlraum (F1) innerhalb des rohrförmigen Probenkörpers (200) und andererseits ein ringförmiges Volumen (F2) zwischen der radialen Außenfläche des Probenkörpers (200) und der Gehäusepassage (E) umfasst;
- Eine Festlegung für einen ersten Endabschnitt des rohrförmigen Probenträgers (200) an einer ersten Abtrennung (H1) der Fluid-Druckkammer (F) mittels einer ersten Rohraufnahme (G1);
- Einen Probenträger (K, K`) mit einer zweiten Rohraufnahme (G, G2, G`), wobei der Probenträger (K, K') an einem von dem ersten Axialende der Gehäusepassage (E) beabstandeten Bereich anordenbar oder angeordnet ist und zumindest anteilig die zweite Abtrennung (H2) der Fluid-Druckkammer (F) bildet;
- Und wobei der rohrförmige Probenkörper (200) in der vorgesehenen Montageposition zwischen der ersten Rohraufnahme (G1) und der zweiten Rohraufnahme (G2) befestigbar ist;
- Und wobei die Materialprüfvorrichtung (100) eine Liquid-Zuführung (M) aufweist, die dazu ausgebildet ist, dass der Hohlraum (F1) und das ringförmige Volumen (F2) der Fluid-Druckkammer (F) mit Flüssigkeit (L) befüllbar sind, die Flüssigkeit (L) in dem Hohlraum (F1) und in dem ringförmigen Volumen (F2) mit Überdruck (P+) beaufschlagbar ist sowie dass weitere mit Überdruck (P+) beaufschlagbare Flüssigkeit (L) in den Hohlraum (F1) sowie das ringförmige Volumen (F2) einbringbar ist;
- Und wobei der Probenträger (K, K`) in der Gehäusepassage (E) unter der weiteren Einbringung von mit Überdruck (P+) beaufschlagter Flüssigkeit (L) mitsamt der zweiten Rohraufnahme (G2) sowie unter Mitnahme des dort festgelegten Endabschnitts des Probenkörpers (200) in Axialrichtung (A, B) des Probenkörpers (200) verschiebbar ist.

10. Materialprüfvorrichtung nach dem vorhergehenden Anspruch, wobei der Probenträger (K) nach einem der vorhergehenden Ansprüche ausgebildet ist.

11. Materialprüfvorrichtung nach einem der vorhergehenden Ansprüche, wobei die Materialprüfvorrichtung (100, 300)
- eine Druckversorgungseinheit (130) aufweist, die insbesondere eine Druckversorgungsvorrichtung (131, PSD) umfasst, die unter Verwendung einer Flüssigkeit (L) in der Fluid-Druckkammer (F) im Inneren des Gehäuses (110) Druck (P+) bereitstellt; UND/ODER
- die Materialprüfvorrichtung (100, 300) eine Datenverarbeitungsvorrichtung (142, DPD) umfasst, die Signale und/oder Daten, insbesondere numerische Daten von Sensoren (141) empfängt und verarbeitet; UND/ODER
- eine Datenverarbeitungseinheit (140) umfasst, die mit Sensoren (141) ausgebildet oder verbunden ist, wobei die Sensoren (141) mindestens einen Parameter während der Durchführung einer Materialprüfung erfassen oder überwachen, und wobei der mindestens eine Parameter insbesondere umfasst
· Einen Druck in der Fluid-Druckkammer (F) und/oder einen Druck der Druckversorgungseinheit (130); UND/ODER
· eine Verschiebung zumindest eines Teilabschnitts des rohrförmigen Probenkörpers (200), insbesondere eines Endabschnitts des rohrförmigen Probenkörpers (200); UND/ODER
· eine axiale Zugspannung in der Wandung des rohrförmigen Probenkörpers (200); UND/ODER
· eine Verformung, insbesondere eine Dehnung des rohrförmigen Probenkörpers (200); UND/ODER
· eine Energie oder Leistung, die für das Einbringen der Flüssigkeit und/oder für das Verschieben des Endabschnitts des Probenkörpers (200) in der Axialrichtung (A, B) aufgewendet wird.

12. Materialprüfvorrichtung nach einem der vorhergehenden Ansprüche, wobei
- die Materialprüfvorrichtung (100) mindestens einen Probenträger (K) umfasst, der als eine Endkappe (121, 122) ausgebildet ist; UND/ODER
- die Materialprüfvorrichtung (300) mindestens einen Probenträger (K') umfasst, der als ein Ring (321, 322) ausgebildet ist und der mit einem Stirnöffnung-Verschlusselement (N) zusammenwirkt, das insbesondere an einem zugeordneten Endabschnitt des Probenkörpers (200) einstückig angefügt ist.

13. Materialprüfverfahren zur Prüfung der Belastbarkeit eines rohrförmigen Probenkörpers (200), wobei das Prüfverfahren die folgenden Schritte umfasst:
- Bereitstellen eines druckstabilen Gehäuses (110) mit einer Gehäusepassage (E);
- Einbringen des rohrförmigen Probenkörpers (200) in die Gehäusepassage (E);
- Abtrennen einer Fluid-Druckkammer (F) innerhalb eines Teils der Gehäusepassage (E), wobei die Fluid-Druckkammer (F) einerseits einen Hohlraum (F1) in dem rohrförmigen Probenkörper (200) und andererseits ein ringförmiges Volumen (F2) zwischen der radialen Außenfläche des Probenkörpers (200) und der Gehäusepassage (E) umfasst;
- Festlegen von zwei Endabschnitten des Probenkörpers (200) an den in Axialrichtung (A,B) des Probenkörpers (200) einander gegenüberliegenden Abtrennungen (H1, H2) der Fluid-Druckkammer (F);
- Einbringen einer Flüssigkeit (L) in die Fluid-Druckkammer (F), sodass sowohl der Hohlraum (F1) als auch das ringförmige Volumen (F2) mit Flüssigkeit (L) gefüllt sind oder werden;
- Beaufschlagen der Flüssigkeit (L) in der Fluid-Druckkammer (F) mit einem Überdruck (P+);
- Dehnen des rohrförmigen Probenkörpers (200) in einer Axialrichtung (A,B) unter weiterem Einbringen von mit Überdruck (P+) beaufschlagter Flüssigkeit (L) in den Hohlraum (F1) sowie das ringförmige Volumen (F2), wobei sich das Volumen der Fluid-Druckkammer (F) erweitert und sich zumindest eine Abtrennung (H1, H2) der Fluid-Druckkammer (F) in der Axialrichtung (A,B) des rohrförmigen Probenkörpers (200) unter Mitnahme des dort festgelegten Endabschnitts des Probenkörpers (200) verschiebt;
- Messen oder Überwachen zumindest eines Parameters, um eine Belastbarkeitseigenschaft des Probenkörpers (200) während der Druckbeaufschlagung zu beurteilen.

14. Materialprüfverfahren gemäß dem vorhergehenden Anspruch wobei
- zumindest eine Abtrennung (H1, H2) der Fluid-Druckkammer (F) zumindest anteilig durch einen Probenträger (K,K`) gemäß einem der vorhergehenden Ansprüche 1 bis 14 gebildet wird;
UND/ODER wobei
- das Materialprüfverfahren mit einer Materialprüfvorrichtung nach einem der vorhergehenden Ansprüche 9 bis 12 durchgeführt wird.

15. Materialprüfverfahren nach einem der vorhergehenden Ansprüche, wobei der rohrförmige Probenkörper (200) gebildet ist durch:
- Mindestens ein aus einem synthetischen Material hergestelltes Rohr (200) ist, insbesondere ein Kunststoffrohr; UND/ODER
- Mindestens ein aus einem Verbundmaterial hergestelltes Rohr (200), insbesondere ein Rohr (200) umfassend ein in einer Matrix eingebettetes Fasermaterial; UND/ODER
- Ein aus zwei Teil-Probenkörpern (200, 200`) verbundenes oder gefügtes Rohr, wobei die Teil-Probenkörper (200, 200`) insbesondere an ihren zum Mittelbereich weisenden Stirnseiten
· durch eine Verbindung (210) miteinander gefügt oder gekoppelt sind; ODER
· durch eine Rohr-Kupplung miteinander verbunden sind.

## Claims

1. Specimen carrier (K, K') for receiving an endsection of a pipe-shaped specimen body (200) for carrying out a load capacity test, the specimen carrier (K, K') having an inside (Ki) which, in the intended mounting position, is oriented towards a middle section of the specimen body (200) to be tested, and an outside (Ko) which is opposite in the axial direction (A, B) of the specimen body (200), and a jacket surface (Km) between the inside and the outside, and wherein the specimen carrier (K, K') has
- a pipe receptacle (G, G2, G') which is designed to fix the endsection of the specimen body (200) to the specimen carrier (K);
**characterized in that**
- the specimen carrier (K, K') is designed to be received in a surrounding housing passage (E) with an annular contact against the housing passage (E), and
- **in that** the specimen carrier (K, K') further has an annular sealing structure (S, S1) which is arranged on the jacket surface (Km) of the specimen carrier (K, K'), the sealing structure (S, S1) being designed to
· forming an annular seal with respect to the housing passage (E) and
· allowing displacement (T) of the specimen carrier (K, K') in the axial direction (A, B) along the housing passage (E).

2. Specimen carrier (K, K') according to the preceding claim, wherein,
- the pipe receptacle is designed to receive and hold the endsection of the specimen body (200) in a grasping manner and in particular forms a clamping pipe receptacle (G); AND/OR
- the pipe receptacle is designed to support a collar (O) projecting from the endsection of the specimen body (200) in the radial direction and preferably joined in one-piece to the endsection, and in particular forms an axial stop pipe receptacle (G').

3. Specimen carrier (K, K') according to one of the preceding claims, wherein the sealing structure (S, S1) is formed on the jacket surface (Km) by
- a sealing body; AND/OR
- an annular gap sealing formed by a micro gap between the radial outer contour of the jacket surface (Km) and the radial inner contour of the housing passage (E).

4. Specimen carrier (K, K') according to one of the preceding claims, wherein the specimen carrier (K, K') comprises a second sealing structure (S2) which is designed to effect a seal between the specimen carrier (K, K') and a radial outer surface of the specimen body (200) in the intended mounting position.

5. Specimen carrier (K, K') according to one of the preceding claims 3 or 4, wherein the specimen carrier (K)
- comprises a pressure-proof wall portion (W1) forming at least a part of the inside (Ki) of the specimen carrier (K, K') and extending between the first sealing structure (S1) acting on the housing passage (E) and a second sealing structure (S2) acting on a radial outer surface of the specimen body (200); AND/OR
- is formed as an endcap (K, 121, 122) which overlaps an end face of a cavity (F1) within the pipe-shaped specimen body (200) and further overlaps an end face of an annular volume (F2) located between the radial outer surface of the specimen body (200) and the housing passage (E); AND/OR
- has a further sealing structure (S3) which is designed to effect a seal between the specimen carrier (K, K') and a radial inner surface of the specimen body (200) in the intended mounting position.

6. Specimen carrier (K) according to one of the preceding claims, wherein the clamping pipe receptacle (G2) has an outer socket (121b) and an inner socket (121c), between which the endsection of the specimen body can be gripped in a clamping manner.

7. Specimen carrier (K) according to one of the preceding claims, wherein the specimen carrier (K) comprises at least one wedge body (121d) which is designed to be acted upon by a liquid (L) under overpressure (P+) on the inside (Ki) of the specimen carrier (K) during the performance of a material test and to bring about an actuation or increase of the gripping effect from the pressurization, with which the pipe receptacle (G, G2) fixes the endsection of the specimen body (200).

8. Specimen carrier (K, K') according to one of the preceding claims 1 to 4, wherein the specimen carrier is formed as a specimen carrier ring (K') which overlaps an end face of an annular volume (F2) which lies between the radial outer surface of the specimen body (200) and the housing passage (E), and wherein the specimen carrier ring (K') is formed to be cooperating with a face opening closure element (N), wherein the face opening closure element (N) is in particular one-piece joinable or one-piece joined to an endsection of the pipe-shaped specimen body (200) in order to overlap and pressure-tightly close a face opening of a cavity (F1) within the pipe-shaped specimen body (200).

9. A material testing device for performing a load capacity test on a pipe-shaped specimen body (200), the material testing device (100) comprising:
- A pressure-proof housing (110) with a housing passage (E);
- a separated or separable fluid pressure chamber (F) within a part of the housing passage (E), into which the pipe-shaped specimen body (200) can be inserted in an intended mounting position, wherein the fluid pressure chamber (F) comprises on the one hand a cavity (F1) within the pipe-shaped specimen body (200) and on the other hand an annular volume (F2) between the radial outer surface of the specimen body (200) and the housing passage (E);
- a fixation for a first endsection of the pipe-shaped specimen carrier (200) at a first separation (H1) of the fluid pressure chamber (F) by means of a first pipe receptacle (G1);
- a specimen carrier (K, K') with a second pipe receptacle (G, G2, G'), wherein the specimen carrier (K, K') can be arranged or is arranged at a region at a distance from the first axial end of the housing passage (E) and at least partially forms the second separation (H2) of the fluid pressure chamber (F);
- and wherein the pipe-shaped specimen body (200) is fixable in the intended mounting position between the first pipe receptacle (G1) and the second pipe receptacle (G2);
- and wherein the material testing device (100) has a liquid supply (M) which is designed so that the cavity (F1) and the annular volume (F2) of the fluid pressure chamber (F) can be filled with liquid (L), wherein the liquid (L) can be subjected to overpressure (P+) in the cavity (F1) and in the annular volume (F2), and wherein further liquid (L) which can be subjected to overpressure (P+) can be introduced into the cavity (F1) and the annular volume (F2);
- and wherein with the further introduction of liquid (L) to which overpressure (P+) can be applied the specimen carrier (K, K') is displaceable in the housing passage (E) in the axial direction (A, B) of the specimen body (200) together with the second pipe receptacle (G2) and with the endsection of the specimen body (200) fixed there being entrained.

10. Material testing device according to the preceding claim, wherein the specimen carrier (K) is designed according to one of the preceding claims.

11. Material testing device according to any one of the preceding claims, wherein the material testing device (100, 300) comprises
- a pressure supplying unit (130) in particular comprising a pressure supplying device (131, PSD) providing pressure (P+) in the fluid pressure chamber (F) inside the housing (110) by using a liquid (L); AND/OR
- the material testing device (100, 300) comprises a data processing device (142, DPD) which receives and processes signals and/or data, in particular numerical data from sensors (141); AND/OR
- a data processing unit (140) formed or connected to sensors (141), wherein the sensors (141) detect or monitor at least one parameter during the performance of a material test, and wherein the at least one parameter comprises in particular
▪ a pressure in the fluid pressure chamber (F) and/or a pressure of the pressure supplying unit (130); AND/OR
▪ a displacement of at least a partial section of the pipe-shaped specimen body (200), in particular an endsection of the pipe-shaped specimen body (200); AND/OR
▪ an axial tensile stress in the wall of the pipe-shaped specimen body (200); AND/OR
▪ a deformation, in particular an elongation of the pipe-shaped specimen body (200); AND/OR

12. The material testing device according to any one of the preceding claims, wherein
- the material testing device (100) comprises at least one specimen carrier (K) formed as an endcap (121, 122); AND/OR
- the material testing device (300) comprises at least one specimen carrier (K') which is designed as a ring (321, 322) and which interacts with a face opening closure element (N) which is in particular joined in one-piece to an associated endsection of the specimen body (200).

13. Material testing method for testing the mechanical strength of a pipe-shaped specimen body (200), the testing method comprising the following steps:
- Providing a pressure-proof housing (110) with a housing passage (E);
- inserting the pipe-shaped specimen body (200) into the housing passage (E);
- separating a fluid pressure chamber (F) within a part of the housing passage (E), the fluid pressure chamber (F) comprising on the one hand a cavity (F1) in the pipe-shaped specimen body (200) and on the other hand an annular volume (F2) between the radial outer surface of the specimen body (200) and the housing passage (E);
- fixing two endsections of the specimen body (200) at separations (H1, H2) of the fluid pressure chamber (F) which are opposite to each other in the axial direction (A, B) of the specimen body (200);
- introducing a liquid (L) into the fluid pressure chamber (F) so that both the cavity (F1) and the annular volume (F2) are or become filled with liquid (L);
- pressurizing the liquid (L) in the fluid pressure chamber (F) with an overpressure (P+);
- stretching the pipe-shaped specimen body (200) in an axial direction (A, B) with further introduction of liquid (L) pressurized with overpressure (P+) into the cavity (F1) and the annular volume (F2), the volume of the fluid pressure chamber (F) expanding and at least one separation (H1, H2) of the fluid pressure chamber (F) displacing in the axial direction (A, B) of the pipe-shaped specimen body (200), taking along the endsection of the specimen body (200) fixated there;
- measuring or monitoring at least one parameter to evaluate a load-bearing property of the specimen body (200) during pressurization.

14. A material testing method according to the preceding claim wherein
- at least one separation (H1, H2) of the fluid pressure chamber (F) is at least partially formed by a specimen carrier (K, K') according to any one of the preceding claims 1 to 14; AND/OR wherein
- the material testing method is carried out with a material testing device according to any one of the preceding claims 9 to 12.

15. The material testing method according to any one of the preceding claims, wherein the pipe-shaped specimen body (200) is formed by:
- At least one tube (200) made of a synthetic material, in particular a plastic tube; AND/OR
- at least one tube (200) made of a composite material, in particular a tube (200) comprising a fiber material embedded in a matrix; AND/OR
- A tube connected or joined from two partial specimen bodies (200, 200'), wherein the partial specimen bodies (200, 200'), in particular at their face sides pointing towards the middle section
▪ are joined or coupled together by a fusion (210); OR
▪ are connected to each other by a pipe coupling.

## Revendications

1. Support d'échantillon (K, K') destiné à recevoir une partie d'extrémité d'un corps d'échantillon tubulaire (200) pour la réalisation d'un test de capacité de charge, le support d'échantillon (K, K') ayant une face intérieure (Ki) qui, dans la position de montage prévue, est orientée vers une zone centrale du corps d'échantillon (200) à tester, ainsi qu'un côté extérieur (Ko) opposé dans la direction axiale (A, B) du corps d'échantillon (200) et une surface d'enveloppe (Km) entre le côté intérieur et le côté extérieur, le support d'échantillon (K, K') comprenant:
- un logement de tube (G, G2, G') qui est conçu pour fixer la partie d'extrémité du corps d'échantillon (200) sur le support d'échantillon (K) ;
**caractérisé en ce que**
- le support d'échantillon (K, K') est adapté pour être reçu dans un passage de boîtier environnant (E) avec un contact annulaire par rapport au passage de boîtier (E), et
- **en ce que** le support d'échantillon (K, K') comprend en outre une structure d'étanchéité annulaire (S, S1) qui est disposée sur la surface d'enveloppe (Km) du support d'échantillon (K, K'), la structure d'étanchéité (S, S1) étant conçue à cet effet,
▪ à former un joint d'étanchéité annulaire par rapport au passage du boîtier (E), et
▪ à permettre un déplacement (T) du porte-échantillon (K, K') dans la direction axiale (A, B) le long du passage de boîtier (E).

2. Porte-échantillon (K, K') selon la revendication précédente, dans lequel,
- le logement de tube est adapté pour recevoir et maintenir par saisie la partie d'extrémité du corps d'échantillon (200) et forme en particulier un logement de tube de serrage (G) ; ET/OU
- le logement de tube est conçu pour soutenir un collet (O) dépassant dans la direction radiale de la section d'extrémité du corps d'échantillon (200) et assemblé de préférence d'une seule pièce avec la section d'extrémité, et forme en particulier un logement de tube à butée axiale (G').

3. Porte-échantillon (K, K') selon l'une des revendications précédentes, dans lequel la structure d'étanchéité (S, S1) est réalisée sur la surface latérale (Km) par
- un corps d'étanchéité ; ET/OU
- un joint d'étanchéité à fente annulaire formé par une microfente entre le contour radial extérieur de la surface d'enveloppe (Km) et le contour radial intérieur du passage de boîtier (E).

4. Porte-échantillon (K, K') selon l'une des revendications précédentes, dans lequel le porte-échantillon (K, K') présente une deuxième structure d'étanchéité (S2) qui est conçue pour assurer une étanchéité entre le porte-échantillon (K, K') et une surface extérieure radiale du corps d'échantillon (200) dans la position de montage prévue.

5. Porte-échantillon (K, K') selon l'une des revendications précédentes 3 ou 4, dans lequel le porte-échantillon (K)
- comprend une partie de paroi résistante à la pression (W1) formant au moins une partie de l'intérieur (Ki) du porte-échantillon (K, K') et s'étendant entre la première structure d'étanchéité (S1) agissant sur le passage du boîtier (E) et une seconde structure d'étanchéité (S2) agissant sur une surface radialement extérieure du corps d'échantillon (200) ; ET/OU
- est formé comme un capuchon d'extrémité (K, 121, 122) qui couvre une face d'extrémité d'une cavité (F1) à l'intérieur du corps d'échantillon tubulaire (200) et qui couvre en outre une face d'extrémité d'un volume annulaire (F2) situé entre la surface radialement extérieure du corps d'échantillon (200) et le passage de boîtier (E) ; ET/OU
- comprend une autre structure d'étanchéité (S3) qui est conçue pour assurer l'étanchéité entre le porte-échantillon (K, K') et une surface radialement intérieure du corps d'échantillon (200) dans la position de montage prévue.

6. Porte-échantillon (K) selon l'une des revendications précédentes, dans lequel le logement tubulaire (G2) présente une monture extérieure (121b) et une monture intérieure (121c) entre lesquelles la portion d'extrémité du corps d'échantillon peut être saisie par serrage.

7. Porte-échantillon (K) selon l'une quelconque des revendications précédentes, dans lequel le porte-échantillon (K) comprend au moins un corps à paroi inclinée (121d) qui est conçu pour être alimenté en liquide (L) sous surpression (P+) sur la face interne (Ki) du porte-échantillon (K) pendant l'exécution d'un test de matériau et pour provoquer, à partir de l'alimentation en pression, un actionnement ou une augmentation de l'effet de préhension avec lequel le logement tubulaire (G, G2) fixe la section d'extrémité du corps d'échantillon (200).

8. Porte-échantillon (K, K') selon l'une quelconque des revendications précédentes 1 à 4, dans lequel le porte-échantillon est réalisé sous la forme d'une bague porte-échantillon (K') qui couvre une surface frontale d'un volume annulaire (F2) qui se trouve entre la surface radialement extérieure du corps d'échantillon (200) et le passage de boîtier (E), et dans lequel la bague porte-échantillon (K') est réalisée à cet effet, coopérer avec un élément de fermeture d'ouverture d'extrémité (N), l'élément de fermeture d'ouverture d'extrémité (N) pouvant être ajouté ou étant ajouté d'un seul tenant, en particulier à une partie d'extrémité du corps d'échantillon tubulaire (200), afin de couvrir une surface d'extrémité d'une cavité (F1) à l'intérieur du corps d'échantillon tubulaire (200) et de la fermer de manière étanche à la pression.

9. Dispositif d'essai de matériau pour effectuer un essai de résistance à la charge sur une éprouvette tubulaire (200), le dispositif d'essai de matériau (100) comprenant :
- Un boîtier (110) résistant à la pression avec un passage de boîtier (E) ;
- A l'intérieur d'une partie du passage de boîtier (E), une chambre de pression de fluide (F) séparée ou séparable, dans laquelle l'éprouvette tubulaire (200) peut être introduite dans une position de montage prévue, la chambre de pression de fluide (F) comprenant d'une part une cavité (F1) à l'intérieur de l'éprouvette tubulaire (200) et d'autre part un volume annulaire (F2) entre la surface radialement extérieure de l'éprouvette (200) et le passage de boîtier (E) ;
- Une fixation pour une première partie d'extrémité du support d'échantillon tubulaire (200) à une première séparation (H1) de la chambre de pression de fluide (F) au moyen d'un premier logement de tube (G1) ;
- un support d'échantillon (K, K') avec un deuxième logement tubulaire (G, G2, G'), le support d'échantillon (K, K') pouvant être disposé ou étant disposé sur une zone distanciée de la première extrémité axiale du passage de boîtier (E) et formant au moins en partie la deuxième séparation (H2) de la chambre de pression de fluide (F) ;
- Et dans lequel le corps d'échantillon tubulaire (200) peut être fixé dans la position de montage prévue entre le premier logement tubulaire (G1) et le deuxième logement tubulaire (G2) ;
- Et dans lequel le dispositif d'essai de matériau (100) présente une alimentation en liquide (M) qui est conçue pour que la cavité (F1) et le volume annulaire (F2) de la chambre de pression de fluide (F) puissent être remplis de liquide (L), que le liquide (L) puisse être soumis à une surpression (P+) dans la cavité (F1) et dans le volume annulaire (F2) et que d'autres liquides (L) pouvant être soumis à une surpression (P+) puissent être introduits dans la cavité (F1) ainsi que dans le volume annulaire (F2) ;
- et le porte-échantillon (K, K') pouvant être déplacé dans le passage du boîtier (E) dans la direction axiale (A, B) du corps d'échantillon (200), avec l'introduction supplémentaire de liquide (L) soumis à une surpression (P+), y compris le deuxième logement tubulaire (G2) ainsi qu'avec l'entraînement de la section d'extrémité du corps d'échantillon (200) qui y est fixée.

10. Dispositif d'essai de matériaux selon la revendication précédente, dans lequel le porte-échantillon (K) est réalisé selon l'une des revendications précédentes.

11. Dispositif d'essai de matériaux selon l'une des revendications précédentes, dans lequel le dispositif d'essai de matériaux (100, 300)
- comporte une unité d'alimentation en pression (130) comprenant notamment un dispositif d'alimentation en pression (131, PSD) qui fournit une pression (P+) en utilisant un liquide (L) dans la chambre de pression de fluide (F) à l'intérieur du boîtier (110) ; ET/OU
- le dispositif d'essai de matériau (100, 300) comprend un dispositif de traitement de données (142, DPD) qui reçoit et traite des signaux et/ou des données, en particulier des données numériques, provenant de capteurs (141) ; ET/OU
- comprend une unité de traitement de données (140) formée ou connectée à des capteurs (141), lesdits capteurs (141) détectant ou surveillant au moins un paramètre pendant l'exécution d'un test de matériau, et dans lequel ledit au moins un paramètre comprend notamment
▪ une pression dans la chambre de pression de fluide (F) et/ou une pression de l'unité d'alimentation en pression (130) ; ET/OU
▪ un déplacement d'au moins une partie de l'échantillon tubulaire (200), en particulier une partie d'extrémité de l'échantillon tubulaire (200) ; ET/OU
▪ une contrainte de traction axiale dans la paroi du corps d'échantillon tubulaire (200) ; ET/OU
▪ une déformation, en particulier un allongement de l'éprouvette tubulaire (200) ; ET/OU
▪ une énergie ou une puissance dépensée pour l'introduction du liquide et/ou pour le déplacement de la partie d'extrémité du corps d'échantillon (200) dans la direction axiale (A, B).

12. Dispositif d'essai de matériaux selon l'une quelconque des revendications précédentes, dans lequel
- le dispositif d'essai de matériau (100) comprend au moins un support d'échantillon (K) qui est formé comme un capuchon d'extrémité (121, 122) ; ET/OU
- le dispositif d'essai de matériau (300) comprend au moins un support d'échantillon (K') qui est réalisé sous la forme d'une bague (321, 322) et qui coopère avec un élément de fermeture d'ouverture frontale (N) qui est notamment ajouté d'un seul tenant à une partie d'extrémité associée du corps d'échantillon (200).

13. Procédé d'essai de matériau pour tester la capacité de charge d'une éprouvette tubulaire (200), le procédé d'essai comprenant les étapes suivantes :
- Fournir un boîtier (110) résistant à la pression avec un passage de boîtier (E) ;
- Introduction de l'échantillon tubulaire (200) dans le passage du boîtier (E) ;
- séparer une chambre de pression de fluide (F) à l'intérieur d'une partie du passage de boîtier (E), la chambre de pression de fluide (F) comprenant d'une part une cavité (F1) dans le corps d'échantillon tubulaire (200) et d'autre part un volume annulaire (F2) entre la surface radialement extérieure du corps d'échantillon (200) et le passage de boîtier (E) ;
- fixation de deux parties d'extrémité du corps d'échantillon (200) aux séparations (H1, H2) opposées l'une à l'autre dans la direction axiale (A, B) du corps d'échantillon (200) de la chambre de pression de fluide (F) ;
- Introduction d'un liquide (L) dans la chambre de pression de fluide (F), de sorte que tant la cavité (F1) que le volume annulaire (F2) sont ou seront remplis de liquide (L) ;
- Mise sous pression du liquide (L) dans la chambre de pression de fluide (F) avec une surpression (P+) ;
- étirer l'éprouvette tubulaire (200) dans une direction axiale (A, B) en continuant à introduire du liquide (L) soumis à une surpression (P+) dans la cavité (F1) ainsi que dans le volume annulaire (F2), le volume de la chambre de pression de fluide (F) s'élargissant et au moins une séparation (H1, H2) de la chambre de pression de fluide (F) se déplaçant dans la direction axiale (A, B) de l'éprouvette tubulaire (200) en entraînant la partie d'extrémité de l'éprouvette (200) qui y est fixée ;
- mesurer ou surveiller au moins un paramètre afin d'évaluer une caractéristique de capacité de charge de l'éprouvette (200) pendant la mise sous pression.

14. Procédé d'essai de matériau selon la revendication précédente, dans lequel
- au moins une séparation (H1, H2) de la chambre de pression de fluide (F) est formée au moins en partie par un porte-échantillon (K, K') selon l'une quelconque des revendications précédentes 1 à 14 ; ET/OU dans lequel
- le procédé d'essai de matériau est mis en oeuvre avec un dispositif d'essai de matériau selon l'une quelconque des revendications 9 à 12 précédentes.

15. Procédé d'essai de matériaux selon l'une quelconque des revendications précédentes, dans lequel l'éprouvette tubulaire (200) est formée par :
- Au moins un tube (200) réalisé en un matériau synthétique, notamment un tube en matière plastique ; ET/OU
- Au moins un tube (200) fait d'un matériau composite, en particulier un tube (200) comprenant un matériau fibreux noyé dans une matrice ; ET/OU
- Un tube relié ou assemblé à partir de deux éprouvettes partielles (200, 200'), les éprouvettes partielles (200, 200') étant, en particulier sur leurs faces frontales orientées vers la zone médiane
▪ sont assemblés ou couplés entre eux par une liaison (210) ; OU
▪ sont reliés entre eux par un couplage de tubes.
